# EUROPEAN PATENT APPLICATION

(11) **EP 4 506 833 A1**
(43) Date of publication of application: **12.02.2025**
(21) Application number: 24190743.5
(22) Date of filing: 24.07.2024
(51) Int. Cl.: G06F 16/332

(54) **LARGE LANGUAGE MODEL-BASED VIRTUAL ASSISTANT FOR HIGH-LEVEL GOAL CONTEXTUALIZED ACTION RECOMMENDATIONS**

(30) Priority: 10.08.2023 US 202363518625 P; 12.07.2024 US 202418771207
(71) Applicant: Meta Platforms Technologies, LLC, Menlo Park, CA 94025 (US)
(72) Inventor: Jones, Brennan David Gorham, Menlo Park (US); Xu, Yan, Menlo Park (US); Eghbalzadeh, Hamid, Menlo Park (US)
(74) Representative: Murgitroyd & Company

(57) **Abstract**

The present disclosure relates to using a large language model (LLM), provided with user context information and user high-level goal information to generate contextualized action recommendations that can help the user achieve the high-level goal(s). In one exemplary embodiment, a user system, and an AI action recommendation system that is associated with an LLM, are communicatively coupled and cooperatively implement a contextualized action recommendation virtual assistant. Input data comprising personal information data of the user that includes at least one high-level goal of the user, and user context data obtained from the user system can be collected and used to generate a prompt that is input to the LLM. The LLM can then generate a contextualized action recommendation for the user based on the prompt, and the contextualized action recommendation can be presented to the user via a virtual assistant user interface on a display of the user system.

## Description

### FIELD

The present disclosure relates generally to providing action recommendations to a user, and more particularly, using an AI system that utilizes large language models to provide users with contextualized action recommendations that can help the users achieve high-level goals.

### BACKGROUND

A virtual assistant is an artificial intelligence (AI) enabled software agent that can perform tasks or services including: answer questions, provide information, play media, and provide an intuitive interface for connected devices (e.g., smart home devices) for an individual based on voice or text utterances (e.g., commands or questions). Conventional virtual assistants process the words a user speaks or types and converts them into digital data that the software can analyze. The software uses a speech and/or text recognition-algorithm to find the most likely answer, solution to a problem, information, or command for a given task. As the number of utterances increase, the software learns over time what users want when they supply various utterances. This helps improve the reliability and speed of responses and services. In addition to their self-learning ability, their customizable features and scalability have led virtual assistants to gain popularity across various domain spaces including website chat, computing devices (e.g., smart phones and vehicles), and standalone passive listening devices (e.g., smart speakers).

Even though virtual assistants have proven to be a powerful tool, these domain spaces have also proven to be an inappropriate venue for such a tool. The virtual assistant will continue to be an integral part in these domain spaces but will always likely be viewed as a complementary feature or limited use case, but not a crucial must have feature. Recently, developers have been looking for a better suited domain space for deploying virtual assistants. That domain space is extended reality. Extended reality is a form of reality that has been adjusted in some manner before presentation to a user and generally includes virtual reality (VR), augmented reality (AR), mixed reality (MR), hybrid reality, some combination thereof, and/or derivatives thereof.

Extended reality content may include generated virtual content or generated virtual content that is combined with physical content (e.g., physical or real-world objects). The extended reality content may include digital images, animations, video, audio, haptic feedback, and/or some combination thereof, and any of which may be presented in a single channel or in multiple channels (e.g., stereo video that produces a three-dimensional effect to the viewer). Extended reality may be associated with applications, products, accessories, services, and the like that can be used to create extended reality content and/or used in (e.g., perform activities in) an extended reality. An extended reality system that provides such content may be implemented on various platforms, including a head-mounted display (HMD) connected to a host computer system, a standalone HMD, a mobile device or computing system, and/or any other hardware platform capable of providing extended reality content to one or more viewers.

However, extended reality headsets and devices are limited in the way users interact with applications. Some provide hand controllers, but controllers betray the point of freeing the user's hands and limit the use of extended reality headsets. Others have developed sophisticated hand gestures for interacting with the components of extended reality applications. Hand gestures are a good medium, but they have their limits. For example, given the limited field of view that extended reality headsets have, hand gestures require users to keep their arms extended so that they enter the active area of the headset's sensors. This can cause fatigue and again limit the use of the headset. This is why virtual assistants have become important as a new interface for extended reality devices such as headsets. Virtual assistants can easily blend in with all the other features that the extended reality devices provide to their users. Virtual assistants can help users accomplish tasks with their extended reality devices that previously required controller input or hand gestures on or in view of the extended reality devices. Users can use virtual assistants to open and close applications, activate features, or interact with virtual objects. When combined with other technologies such as eye tracking, virtual assistants can become even more useful. For instance, users can query for information about the object they are staring at, or ask the virtual assistant to revolve, move, or manipulate a virtual object without using gestures.

### BRIEF SUMMARY

Techniques disclosed herein relate generally to recommendations in an extended reality environment. More specifically and without limitation, techniques disclosed herein relate to contextualized and situated action recommendations for high-level goals in an extended reality environment.

According to an aspect, there is provided a contextualized action recommendation virtual assistant comprising:
a user system comprising a display to display content to a user, one or more sensors to capture input data, and a virtual assistant application;
an AI action recommendation system that is associated with a large language model and includes a virtual assistant engine that is cooperative with the virtual assistant application of the user system to implement the virtual assistant;
one or more processors; and
one or more memories accessible to the one or more processors, the one or more memories storing a plurality of instructions executable by the one or more processors, the plurality of instructions comprising instructions that, when executed by the one or more processors, cause the one or more processors to perform processing comprising:
   collecting input data comprising personal information data of the user that includes at least one high-level goal of the user, and user context data from the one or more sensors of the user system;
   generating, using the input data, a prompt for the large language model;
   inputting the prompt to the large language model;
   generating, by the large language model, a contextualized action recommendation for the user based on the prompt, wherein the contextualized action recommendation is predicted to help the user achieve the at least one high-level goal; and
   presenting the contextualized action recommendation to the user via a virtual assistant user interface on the display of the user system.

In some embodiments, the user system of the contextualized action recommendation virtual assistant comprises a portable electronic device selected from the group consisting of a desktop computer, a notebook or laptop computer, a netbook, a tablet computer, an e-book reader, a global positioning system (GPS) device, a personal digital assistant, a smartphone, a wearable extended reality device, and combinations thereof.

In some embodiments, the contextualized action recommendation presented by the virtual assistant is a natural language contextualized action recommendation.

In some embodiments, the one or more sensors of the user system include one or more of a motion sensor, an image capturing device, an input and/or output audio transducer, a GPS transceiver, and a user system orientation sensor.

In some embodiments, the AI action recommendation system includes a recommendation engine comprising:
a context detector component configured to determine a current user context from the user context data collected from the one or more sensors of the user system, and wherein the current user context includes one or more of a location of the user, places of interest near the location of the user, a time of day, a day of week, weather conditions, movement of the user, and tools available to the user to complete the action of the action recommendation;
a goal parser component configured to receive the personal information data of the user and to divide the at least one high-level goal of the user into a plurality of sub-goals; and
the large language model, wherein the large language model is configured to receive, relative to generating the contextualized action recommendation, the user context from the context detector component and the plurality of sub-goals from the goal parser component.

In some embodiments, the contextualized action recommendation virtual assistant further comprises a remote system communicatively coupled to the AI action recommendation system, the remote system storing a user profile that includes the personal information data of the user.

In some embodiments, the virtual assistant user interface is a chat interface.

According to another aspect, there is provided a computer implemented method comprising:
implementing a virtual assistant through a user system comprising a display that displays content to a user, one or more sensors that capture input data, and a virtual assistant application, in combination with an AI action recommendation system that is associated with a large language model and includes a virtual assistant engine that cooperates with the virtual assistant application of the user system to implement the virtual assistant;
collecting input data comprising personal information data of the user that includes at least one high-level goal of the user, and user context data from the one or more sensors of the user system;
generating, using the input data, a prompt for the large language model;
inputting the prompt to the large language model;
generating, by the large language model, a contextualized action recommendation for the user based on the prompt, wherein the contextualized action recommendation is predicted to help the user achieve the at least one high-level goal; and
presenting the contextualized action recommendation to the user via a virtual assistant user interface on the display of the user system.

In some embodiments, the user system comprises a portable electronic device selected from the group consisting of a desktop computer, a notebook or laptop computer, a netbook, a tablet computer, an e-book reader, a global positioning system (GPS) device, a personal digital assistant, a smartphone, a wearable extended reality device, and combinations thereof.

In some embodiments, the contextualized action recommendation is presented to the user as a natural language contextualized action recommendation.

In some embodiments, the personal information data of the user is retrieved from a user profile associated with the user, and optionally wherein the user profile is selected from the group consisting of a network accessible social media user profile, a user profile stored in a datastore communicatively coupled to the AI action recommendation system, and a user profile stored on the user system.

In some embodiments, the method further comprises privacy rules that determine an extent of the personal information data of the user that is shareable with the AI action recommendation system.

In some embodiments, the virtual assistant is persistent, such that at least some of the user context data is collected at times when the user is not actively engaged with the virtual assistant.

In some embodiments, the virtual assistant user interface is a chat interface.

According to a further aspect, there is provided a non-transitory computer-readable memory storing computer-readable instructions that, when executed by one or more processors, cause the one or more processors to perform the method of any of the method claims.

The techniques described above and below may be implemented in a number of ways and in a number of contexts. Several example implementations and contexts are provided with reference to the following figures, as described below in more detail. However, the following implementations and contexts are but a few of many.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

FIG. 1 is a simplified block diagram of a network environment in accordance with various embodiments.
FIG. 2A is an illustration depicting an example extended reality system that presents and controls user interface elements within an extended reality environment in accordance with various embodiments.
FIG. 2B is an illustration depicting user interface elements in accordance with various embodiments.
FIG. 3A is an illustration of an augmented reality system in accordance with various embodiments.
FIG. 3B is an illustration of a virtual reality system in accordance with various embodiments.
FIG. 4A is an illustration of haptic devices in accordance with various embodiments.
FIG. 4B is an illustration of an exemplary virtual reality environment in accordance with various embodiments.
FIG. 4C is an illustration of an exemplary augmented reality environment in accordance with various embodiments.
FIGS. 5A-5C show different rooms of a mock apartment configured for use in a study to evaluate use of a large language model-based AI action recommendation system to provide users with contextualized action recommendations for achieving high-level goals in accordance with various embodiments.
FIG. 6 is a block diagram that depicts a network environment including system architectures of a large language model-based AI action recommendation system and user system that cooperatively implement an action recommendation virtual assistant in accordance with various embodiments.
FIG. 7 is a system architecture block diagram of a portable electronic device that is usable as the user system of FIG. 6 in accordance with various embodiments.
FIG. 8 is a system architecture flow diagram of a large language model-based virtual assistant operating to provide a user with contextualized action recommendations for achieving high-level goals in accordance with various embodiments.
FIG. 9 is a flow diagram representing a process for utilizing a large language model-based virtual assistant to recommend contextualized actions for achieving high-level goals in accordance with various embodiments.
FIGS. 10A-10C depict screenshots of a smartphone-based conversation between a user and a large language model-based virtual assistant operating to provide the user with contextualized action recommendations for achieving a high-level goal in accordance with various embodiments.
FIGS. 11A-11B depict screenshots of another smartphone-based conversation between a user and a large language model-based virtual assistant operating to provide the user with contextualized action recommendations for achieving a high-level goal in accordance with various embodiments.
FIGS. 12A-12C depict screenshots of another smartphone-based conversation between a user and a large language model-based virtual assistant operating to provide the user with contextualized action recommendations for achieving a high-level goal in accordance with various embodiments.
FIG. 13A depicts a smartphone-based home screen usable to engage a large language model-based virtual assistant configured to provide contextualized action recommendations for achieving high-level goals in accordance with various embodiments.
FIG. 13B depicts a smartphone-based logged actions screen usable to review actions performed by a user at the recommendation of a large language model-based virtual assistant configured to provide contextualized action recommendations for achieving high-level goals in accordance with various embodiments.

### DETAILED DESCRIPTION

In the following description, for the purposes of explanation, specific details are set forth in order to provide a thorough understanding of certain embodiments. However, it will be apparent that various embodiments may be practiced without these specific details. The figures and description are not intended to be restrictive. The word "exemplary" is used herein to mean "serving as an example, instance, or illustration." Any embodiment or design described herein as "exemplary" is not necessarily to be construed as preferred or advantageous over other embodiments or designs.

### Introduction

Extended reality systems are becoming increasingly ubiquitous with applications in many fields, such as computer gaming, health and safety, industrial, and education. As a few examples, extended reality systems are being incorporated into mobile devices, gaming consoles, personal computers, movie theaters, and theme parks. Typical extended reality systems include one or more devices for rendering and displaying content to users. As one example, an extended reality system may incorporate a head-mounted device (HMD) worn by a user and configured to output extended reality content to the user. In another example, a personal smart assistant such as for example, Meta AI (e.g., in Ray-Ban^{®} glasses or family of apps), may help a user by responding to requests and executing digital operations by accessing APIs and smart /IoT devices. The extended reality content may be generated in a wholly or partially simulated environment (extended reality environment) that people sense and/or interact with via an electronic system. The simulated environment may be a virtual reality (VR) environment, which is designed to be based entirely on computer-generated sensory inputs (*e.g*., virtual content) for one or more user senses, or a mixed reality (MR) environment, which is designed to incorporate sensory inputs (*e.g.,* a view of the physical surroundings) from the physical environment, or a representation thereof, in addition to including computer-generated sensory inputs (*e.g*., virtual content). Examples of MR include augmented reality (AR) and augmented virtuality (AV). An AR environment is a simulated environment in which one or more virtual objects are superimposed over a physical environment, or a representation thereof, or a simulated environment in which a representation of a physical environment is transformed by computer-generated sensory information. An AV environment is a simulated environment in which a virtual or computer-generated environment incorporates one or more sensory inputs from the physical environment. In any instance, during operation in a VR, MR, AR, or AV environment, the user typically interacts with and within the extended reality system to interact with extended reality content.

In many activities undertaken via VR, MR, AR, or AV, users freely roam through simulated and physical environments and are provided with content that contains information that may be important and/or relevant to a user's experience within the simulated and physical environments. Machine learning, artificial intelligence, computer vision and other advanced form of automation associated with the extended reality systems are more and more integrated in everyday tasks with the promise to reduce workload and improve productivity. For example, an extended reality system may assist a user with performance of a task in simulated and physical environments by providing them with content such as information about their environment, recommendations on various actions or tasks available, and instructions for performing the actions or tasks. However, individuals pursuing high-level goals (complex goals requiring different steps for each individual depending on their contexts; goals such as "lose weight", "save money", or "quit smoking") are often clueless on where to start, and/or on the precise steps or tasks needed to act toward their goals that can be enabled by their unique contexts. Some individuals reach out to domain experts (e.g., fitness trainers, therapists, life coaches) for support on their goals. However, these experts are not typically available to the individual 24/7 to observe their life circumstances and provide them just-in-time recommendations at the moments when they are needed. This results in many people giving up on their goals or continuing to act inadequately toward them.

In order to overcome these and other challenges, techniques are disclosed herein that leverages large language models and a user's context (i.e., factors that can be sensed or inferred by wearable electronic devices, inputted by the user, or queried from the Internet -- factors such as one's location, nearby objects/tools, time of day, heart rate, or the current weather conditions) to recommend to the user actions that they can take toward their goals that are supported by those contexts. These contextualized recommendations are then delivered to the user in-situ (e.g., situated next to relevant tools in one's home in augmented reality, delivered when the user is in the right place and time, etc.). In this implementation (which in some embodiments leverages the context factor of available objects), the interface displays action recommendations for the user's goals based on the detected objects nearby, and the recommendations are situated next to the relevant objects using an extended reality system. In some examples, a contextualized action recommendation may be a natural language response to a user request, or a proactive natural language suggestion based on a user's context. In some examples, an action recommendation may instead or additionally include execution of an API as an action. An action recommendation may also be associated with an action that is designed to accomplish multiple tasks using a hierarchy of agents. For example, multiple agents may be used in some order to help a user plan their day by accessing a calendar, schedule a doctor's appointment, answer emails, turn on a coffee machine, and pay bills.

In an exemplary embodiment, a contextualized action recommendation virtual assistant is provided that includes: a user system comprising a display to display content to a user, one or more sensors to capture input data, and a virtual assistant application; an AI action recommendation system that is associated with a large language model and includes a virtual assistant engine that is cooperative with the virtual assistant application of the user system to implement the virtual assistant; one or more processors; and one or more memories accessible to the one or more processors, the one or more memories storing a plurality of instructions executable by the one or more processors, the plurality of instructions comprising instructions that, when executed by the one or more processors, cause the one or more processors to perform processing comprising: collecting input data comprising personal information data of the user that includes at least one high-level goal of the user, and user context data from the one or more sensors of the user system; generating, using the input data, a prompt for the large language model; inputting the prompt to the large language model; generating, by the large language model, a contextualized action recommendation for the user based on the prompt, wherein the contextualized action recommendation is predicted to help the user achieve the at least one high-level goal; and presenting the contextualized action recommendation to the user via a virtual assistant user interface on the display of the user system.

### Extended Reality System Overview

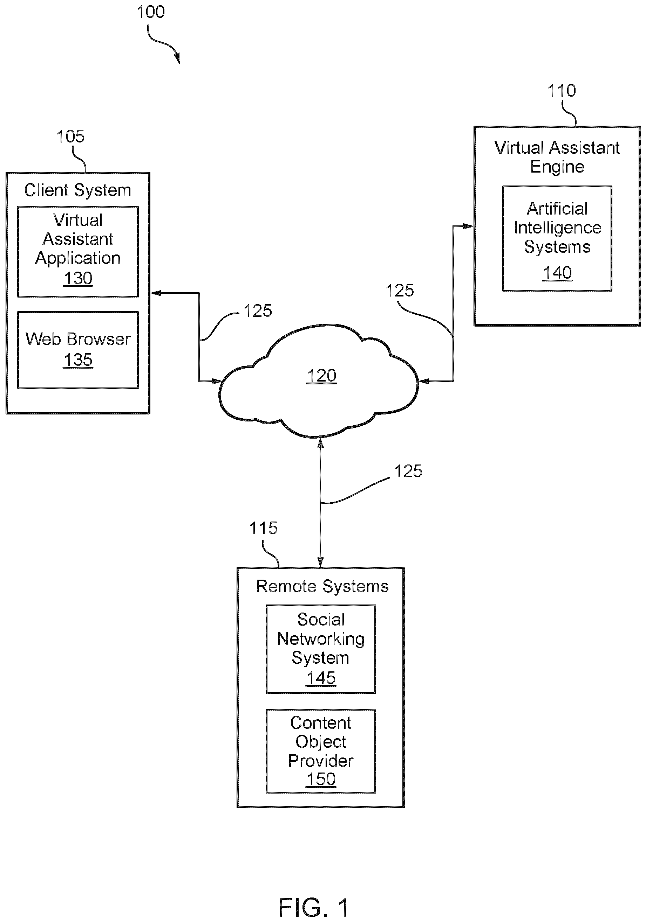

FIG. 1 illustrates an example network environment 100 associated with an extended reality system in accordance with aspects of the present disclosure. Network environment 100 includes a client system 105, a virtual assistant engine 110, and remote systems 115 connected to each other by a network 120. Although FIG. 1 illustrates a particular arrangement of the client system 105, the virtual assistant engine 110, the remote systems 115, and the network 120, this disclosure contemplates any suitable arrangement. As an example, and not by way of limitation, two or more of the client system 105, the virtual assistant engine 110, and the remote systems 115 may be connected to each other directly, bypassing the network 120. As another example, two or more of the client system 105, the virtual assistant engine 110, and the remote systems 115 may be physically or logically co-located with each other in whole or in part. Moreover, although FIG. 1 illustrates a particular number of the client system 105, the virtual assistant engine 110, the remote systems 115, and the network 120, this disclosure contemplates any suitable number of client systems 105, virtual assistant engine 110, remote systems 115, and networks 120. As an example, and not by way of limitation, network environment 100 may include multiple client systems, such as client system 105; virtual assistant engines, such as virtual assistant engine 110; remote systems, such as remote systems 115; and networks, such as network 120.

This disclosure contemplates that network 120 may be any suitable network. As an example, and not by way of limitation, one or more portions of a network 120 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Additionally, the network 120 may include one or more networks.

Links 125 may connect the client system 105, the virtual assistant engine 110, and the remote systems 115 to the network 120, to another communication network (not shown), or to each other. This disclosure contemplates links 125 may include any number and type of suitable links. In particular embodiments, one or more of the links 125 include one or more wireline links (e.g., Digital Subscriber Line or Data Over Cable Service Interface Specification), wireless links (*e.g.,* Wi-Fi or Worldwide Interoperability for Microwave Access), or optical links (*e.g.,* Synchronous Optical Network or Synchronous Digital Hierarchy). In particular embodiments, each link of the links 125 includes an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 125, or a combination of two or more such links. Links 125 need not necessarily be the same throughout a network environment 100. For example, some links of the links 125 may differ in one or more respects from some other links of the links 125.

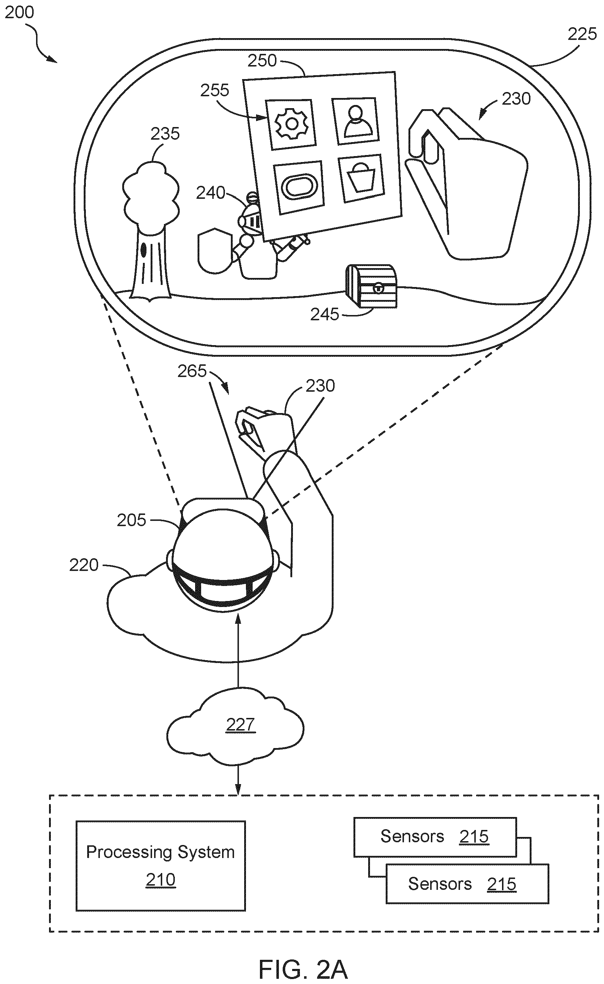

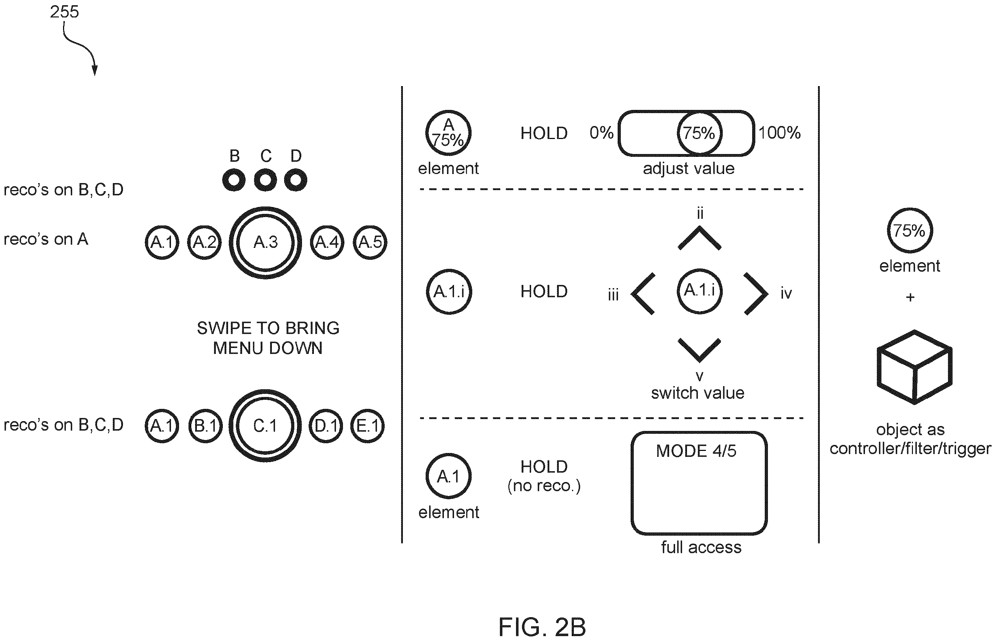

In various embodiments, the client system 105 is an electronic device including hardware, software, or embedded logic components or a combination of two or more such components and capable of carrying out the appropriate extended reality functionalities in accordance with techniques of the disclosure. As an example, and not by way of limitation, the client system 105 may include a desktop computer, notebook or laptop computer, netbook, a tablet computer, e-book reader, global positioning system (GPS) device, camera, personal digital assistant, handheld electronic device, cellular telephone, smartphone, a VR, MR, AR, or AV headset or HMD, any suitable electronic device capable of displaying extended reality content, or any suitable combination thereof. In particular embodiments, the client system 105 is a VR/AR HMD, such as described in detail with respect to FIG. 2. This disclosure contemplates any suitable client system 105 that is configured to generate and output extended reality content to the user. The client system 105 may enable its user to communicate with other users at other client systems.

In various embodiments, the client system 105 includes a virtual assistant application 130. The virtual assistant application 130 instantiates at least a portion of a virtual assistant, which can provide information or services to a user based on user input, contextual awareness (such as clues from the physical environment or clues from user behavior), and the capability to access information from a variety of online sources (such as weather conditions, traffic information, news, stock prices, user schedules, and/or retail prices). As used herein, when an action is "based on" something, this means the action is based at least in part on at least a part of the something. The user input may include text (e.g., online chat), especially in an instant messaging application or other applications, voice, eye-tracking, user motion, such as gestures or running, or a combination of them. The virtual assistant may perform concierge-type services (e.g., making dinner reservations, purchasing event tickets, making travel arrangements, and the like), provide information (e.g., reminders, information concerning an object in an environment, information concerning a task or interaction, answers to questions, training regarding a task or activity, and the like), provide goal assisted services (e.g., generating and implementing a recipe to cook a meal in a certain amount of time, implementing tasks to clean in a most efficient manner, generating and executing a construction plan including allocation of tasks to two or more workers, and the like), or combinations thereof. The virtual assistant may also perform management or data-handling tasks based on online information and events without user initiation or interaction. Examples of those tasks that may be performed by the virtual assistant may include schedule management (e.g., sending an alert to a dinner date to which a user is running late due to traffic conditions, updating schedules for both parties, and changing the restaurant reservation time). The virtual assistant may be enabled in an extended reality environment by a combination of the client system 105, the virtual assistant engine 110, application programming interfaces (APIs), and the proliferation of applications on user devices, such as the remote systems 115.

A user at the client system 105 may use the virtual assistant application 130 to interact with the virtual assistant engine 110. In some instances, the virtual assistant application 130 is a stand-alone application or integrated into another application, such as a social-networking application or another suitable application (e.g., an artificial simulation application). In some instances, the virtual assistant application 130 is integrated into the client system 105 (e.g., part of the operating system of the client system 105), an assistant hardware device, or any other suitable hardware devices. In some instances, the virtual assistant application 130 may be accessed via a web browser 135. In some instances, the virtual assistant application 130 passively listens to and watches interactions of the user in the real-world, and processes what it hears and sees (e.g., explicit input, such as audio commands or interface commands, contextual awareness derived from audio or physical actions of the user, objects in the real-world, environmental triggers such as weather or time, and the like) in order to interact with the user in an intuitive manner.

In particular embodiments, the virtual assistant application 130 receives or obtains input from a user, the physical environment, a virtual reality environment, or a combination thereof via different modalities. As an example, and not by way of limitation, the modalities may include audio, text, image, video, motion, graphical or virtual user interfaces, orientation, and/or sensors. The virtual assistant application 130 communicates the input to the virtual assistant engine 110. Based on the input, the virtual assistant engine 110 analyzes the input and generates responses (e.g., text or audio responses, device commands, such as a signal to turn on a television, virtual content such as a virtual object, or the like) as output. The virtual assistant engine 110 may send the generated responses to the virtual assistant application 130, the client system 105, the remote systems 115, or a combination thereof. The virtual assistant application 130 may present the response to the user at the client system 105 (e.g., rendering virtual content overlaid on a real-world object within the display). The presented responses may be based on different modalities, such as audio, text, image, and video. As an example, and not by way of limitation, context concerning activity of a user in the physical world may be analyzed and determined to initiate an interaction for completing an immediate task or goal, which may include the virtual assistant application 130 retrieving traffic information (e.g., via remote systems 115). The virtual assistant application 130 may communicate the request for traffic information to virtual assistant engine 110. The virtual assistant engine 110 may accordingly contact a third-party system and retrieve traffic information as a result of the request and send the traffic information back to the virtual assistant application 110. The virtual assistant application 110 may then present the traffic information to the user as text (e.g., as virtual content overlaid on the physical environment, such as real-world object) or audio (e.g., spoken to the user in natural language through a speaker associated with the client system 105).

In some embodiments, the client system 105 may collect or otherwise be associated with data. In some embodiments, the data may be collected from or pertain to any suitable computing system or application (e.g., a social-networking system, other client systems, a third-party system, a messaging application, a photo-sharing application, a biometric data acquisition application, an artificial-reality application, a virtual assistant application).

In some embodiments, privacy settings (or "access settings") may be provided for the data. The privacy settings may be stored in any suitable manner (e.g., stored in an index on an authorization server). A privacy setting for the data may specify how the data or particular information associated with the data can be accessed, stored, or otherwise used (e.g., viewed, shared, modified, copied, executed, surfaced, or identified) within an application (e.g., an extended reality application). When the privacy settings for the data allow a particular user or other entity to access that the data, the data may be described as being "visible" with respect to that user or other entity. For example, a user of an extended reality application or virtual assistant application may specify privacy settings for a user profile page that identifies a set of users that may access the extended reality application or virtual assistant application information on the user profile page and excludes other users from accessing that information. As another example, an extended reality application or virtual assistant application may store privacy policies/guidelines. The privacy policies/guidelines may specify what information of users may be accessible by which entities and/or by which processes (e.g., internal research, advertising algorithms, machine-learning algorithms) to ensure only certain information of the user may be accessed by certain entities or processes.

In some embodiments, privacy settings for the data may specify a "blocked list" of users or other entities that should not be allowed to access certain information associated with the data. In some cases, the blocked list may include third-party entities. The blocked list may specify one or more users or entities for which the data is not visible.

In some embodiments, privacy settings associated with the data may specify any suitable granularity of permitted access or denial of access. As an example, access or denial of access may be specified for particular users (e.g., only me, my roommates, my boss), users within a particular degree-of-separation (e.g., friends, friends-of-friends), user groups (e.g., the gaming club, my family), user networks (e.g., employees of particular employers, students or alumni of particular university), all users ("public"), no users ("private"), users of third-party systems, particular applications (e.g., third-party applications, external websites), other suitable entities, or any suitable combination thereof. In some embodiments, different pieces of the data of the same type associated with a user may have different privacy settings. In addition, one or more default privacy settings may be set for each piece of data of a particular data type.

In various embodiments, the virtual assistant engine 110 assists users to retrieve information from different sources, request services from different service providers, assist users to learn or complete goals and tasks using different sources and/or service providers, and combinations thereof. In some instances, the virtual assistant engine 110 receives input data from the virtual assistant application 130 and determines one or more interactions based on the input data that could be executed to request information, services, and/or complete a goal or task of the user. The interactions are actions that could be presented to a user for execution in an extended reality environment. In some instances, the interactions are influenced by other actions associated with the user. The interactions are aligned with goals or tasks associated with the user. Goals may include things that a user wants to occur or desires (e.g., as a meal, a piece of furniture, a repaired automobile, a house, a garden, a clean apartment, and the like). Tasks may include things that need to be done or activities that should be carried out in order to accomplish a goal or carry out an aim (e.g., cooking a meal using one or more recipes, building a piece of furniture, repairing a vehicle, building a house, planting a garden, cleaning one or more rooms of an apartment, and the like). Each goal and task may be associated with a workflow of actions or sub-tasks for performing the task and achieving the goal. For example, for preparing a salad, a workflow of actions or sub-tasks may include ingredients needed, any equipment needed for the steps (e.g., a knife, a stove top, a pan, a salad spinner), sub-tasks for preparing ingredients (e.g., chopping onions, cleaning lettuce, cooking chicken), and sub-tasks for combining ingredients into subcomponents (e.g., cooking chicken with olive oil and Italian seasonings).

The virtual assistant engine 110 may use artificial intelligence (AI) systems 140 (e.g., rule-based systems and/or machine-learning based systems) to analyze the input based on a user's profile and other relevant information. The result of the analysis may include different interactions associated with a task or goal of the user. The virtual assistant engine 110 may then retrieve information, request services, and/or generate instructions, recommendations, or virtual content associated with one or more of the different interactions for completing tasks or goals. In some instances, the virtual assistant engine 110 interacts with remote systems 115, such as a social-networking system 145 when retrieving information, requesting service, and/or generating instructions or recommendations for the user. The virtual assistant engine 110 may generate virtual content for the user using various techniques, such as natural language generating, virtual object rendering, and the like. The virtual content may include, for example, the retrieved information; the status of the requested services; a virtual object, such as a glimmer overlaid on a physical object such as an appliance, light, or piece of exercise equipment; a demonstration for a task, and the like. In particular embodiments, the virtual assistant engine 110 enables the user to interact with it regarding the information, services, or goals using a graphical or virtual interface, a stateful and multi-turn conversation using dialog-management techniques, and/or a stateful and multi-action interaction using task-management techniques.

In various embodiments, remote systems 115 may include one or more types of servers, one or more data stores, one or more interfaces, including but not limited to APIs, one or more web services, one or more content sources, one or more networks, or any other suitable components, e.g., that servers may communicate with. A remote system 115 may be operated by a same entity or a different entity from an entity operating the virtual assistant engine 110. In particular embodiments, however, the virtual assistant engine 110 and third-party systems may operate in conjunction with each other to provide virtual content to users of the client system 105. For example, a social-networking system 145 may provide a platform, or backbone, which other systems, such as third-party systems, may use to provide social-networking services and functionality to users across the Internet, and the virtual assistant engine 110 may access these systems to provide virtual content on the client system 105.

In particular embodiments, the social-networking system 145 may be a network-addressable computing system that can host an online social network. The social-networking system 145 may generate, store, receive, and send social-networking data, such as user-profile data, concept-profile data, social-graph information, or other suitable data related to the online social network. The social-networking system 145 may be accessed by the other components of network environment 100 either directly or via a network 120. As an example, and not by way of limitation, the client system 105 may access the social-networking system 145 using a web browser 135, or a native application associated with the social-networking system 145 (e.g., a mobile social-networking application, a messaging application, another suitable application, or any combination thereof) either directly or via a network 120. The social-networking system 145 may provide users with the ability to take actions on various types of items or objects, supported by the social-networking system 145. As an example, and not by way of limitation, the items and objects may include groups or social networks to which users of the social-networking system 145 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in the social-networking system 145 or by an external system of the remote systems 115, which is separate from the social-networking system 145 and coupled to the social-networking system via the network 120.

The remote systems 115 may include a content object provider 150. A content object provider 150 includes one or more sources of virtual content objects, which may be communicated to the client system 105. As an example, and not by way of limitation, virtual content objects may include information regarding things or activities of interest to the user, such as movie show times, movie reviews, restaurant reviews, restaurant menus, product information and reviews, instructions on how to perform various tasks, exercise regimens, cooking recipes, or other suitable information. As another example and not by way of limitation, content objects may include incentive content objects, such as coupons, discount tickets, gift certificates, or other suitable incentive objects. As another example and not by way of limitation, content objects may include virtual objects, such as virtual interfaces, two-dimensional (2D) or three-dimensional (3D) graphics, media content, or other suitable virtual objects.

FIG. 2A illustrates an example client system 200 (e.g., client system 105 described with respect to FIG. 1) in accordance with aspects of the present disclosure. Client system 200 includes an extended reality system 205 (e.g., an HMD), a processing system 210, and one or more sensors 215. As shown, extended reality system 205 is typically worn by user 220 and includes an electronic display (e.g., a transparent, translucent, or solid display), optional controllers, and optical assembly for presenting extended reality content 225 to the user 220. The one or more sensors 215 may include motion sensors (e.g., accelerometers) for tracking motion of the extended reality system 205 and may include one or more image capturing devices (e.g., cameras, line scanners) for capturing images and other information of the surrounding physical environment. In this example, processing system 210 is shown as a single computing device, such as a gaming console, workstation, a desktop computer, or a laptop. In other examples, processing system 210 may be distributed across a plurality of computing devices, such as a distributed computing network, a data center, or a cloud computing system. In other examples, processing system 210 may be integrated with the HMD. Extended reality system 205, processing system 210, and the one or more sensors 215 are communicatively coupled via a network 227, which may be a wired or wireless network, such as Wi-Fi, a mesh network, or a short-range wireless communication medium, such as Bluetooth wireless technology, or a combination thereof. Although extended reality system 205 is shown in this example as in communication with, e.g., tethered to or in wireless communication with, the processing system 210, in some implementations, extended reality system 205 operates as a stand-alone, mobile extended reality system.

In general, client system 200 uses information captured from a real-world, physical environment to render extended reality content 225 for display to the user 220. In the example of FIG. 2A, the user 220 views the extended reality content 225 constructed and rendered by an extended reality application executing on processing system 210 and/or extended reality system 205. In some examples, the extended reality content 225 viewed through the extended reality system 205 includes a mixture of real-world imagery (e.g., the user's hand 230 and physical objects 235) and virtual imagery (e.g., virtual content, such as information or objects 240, 245 and virtual user interface 250) to produce mixed reality and/or augmented reality. In some examples, virtual information or objects 240, 245 may be mapped (e.g., pinned, locked, placed) to a particular position within extended reality content 225. For example, a position for virtual information or objects 240, 245 may be fixed, as relative to one of walls of a residence or surface of the earth, for instance. A position for virtual information or objects 240, 245 may be variable, as relative to a physical object 235 or the user 220, for instance. In some examples, the particular position of virtual information or objects 240, 245 within the extended reality content 225 is associated with a position within the real world, physical environment (e.g., on a surface of a physical object 235).

In the example shown in FIG. 2A, virtual information or objects 240, 245 are mapped at a position relative to a physical object 235. As should be understood, the virtual imagery (e.g., virtual content, such as information or objects 240, 245 and virtual user interface 250) does not exist in the real-world, physical environment. Virtual user interface 250 may be fixed, as relative to the user 220, the user's hand 230, physical objects 235, or other virtual content, such as virtual information or objects 240, 245, for instance. As a result, client system 200 renders, at a user interface position that is locked relative to a position of the user 220, the user's hand 230, physical objects 235, or other virtual content in the extended reality environment, virtual user interface 250 for display at extended reality system 205 as part of extended reality content 225. As used herein, a virtual element 'locked' to a position of virtual content or a physical object is rendered at a position relative to the position of the virtual content or physical object so as to appear to be part of or otherwise tied in the extended reality environment to the virtual content or physical object.

In some implementations, the client system 200 generates and renders virtual content (e.g., GIFs, photos, applications, live-streams, videos, text, a web-browser, drawings, animations, representations of data files, or any other visible media) on a virtual surface. A virtual surface may be associated with a planar or other real-world surface (e.g., the virtual surface corresponds to and is locked to a physical surface, such as a wall, table, or ceiling). In the example shown in FIG. 2A, the virtual surface is associated with the sky and ground of the physical environment. In other examples, a virtual surface can be associated with a portion of a surface (e.g., a portion of the wall). In some examples, only the virtual content items contained within a virtual surface are rendered. In other examples, the virtual surface is generated and rendered (e.g., as a virtual plane or as a border corresponding to the virtual surface). In some examples, a virtual surface can be rendered as floating in a virtual or real-world physical environment (e.g., not associated with a particular real-world surface). The client system 200 may render one or more virtual content items in response to a determination that at least a portion of the location of virtual content items is in a field of view of the user 220. For example, client system 200 may render virtual user interface 250 only if a given physical object (e.g., a lamp) is within the field of view of the user 220.

During operation, the extended reality application constructs extended reality content 225 for display to user 220 by tracking and computing interaction information (e.g., tasks for completion) for a frame of reference, typically a viewing perspective of extended reality system 205. Using extended reality system 205 as a frame of reference and based on a current field of view as determined by a current estimated interaction of extended reality system 205, the extended reality application renders extended reality content 225 which, in some examples, may be overlaid, at least in part, upon the real-world, physical environment of the user 220. During this process, the extended reality application uses sensed data received from extended reality system 205 and sensors 215, such as movement information, contextual awareness, and/or user commands, and, in some examples, data from any external sensors, such as third-party information or device, to capture information within the real world, physical environment, such as motion by user 220 and/or feature tracking information with respect to user 220. Based on the sensed data, the extended reality application determines interaction information to be presented for the frame of reference of extended reality system 205 and, in accordance with the current context of the user 220, renders the extended reality content 225.

The client system 200 may trigger generation and rendering of virtual content based on a current field of view of user 220, as may be determined by real-time gaze 265 tracking of the user, or other conditions. More specifically, image capture devices of the sensors 215 capture image data representative of objects in the real-world, physical environment that are within a field of view of image capture devices. During operation, the client system 200 performs object recognition within images captured by the image capturing devices of extended reality system 205 to identify objects in the physical environment, such as the user 220, the user's hand 230, and/or physical objects 235. Further, the client system 200 tracks the position, orientation, and configuration of the objects in the physical environment over a sliding window of time. Field of view typically corresponds with the viewing perspective of the extended reality system 205. In some examples, the extended reality application presents extended reality content 225 that includes mixed reality and/or augmented reality.

As illustrated in FIG. 2A, the extended reality application may render virtual content, such as virtual information or objects 240, 245 on a transparent display such that the virtual content is overlaid on real-world objects, such as the portions of the user 220, the user's hand 230, or physical objects 235, that are within a field of view of the user 220. In other examples, the extended reality application may render images of real-world objects, such as the portions of the user 220, the user's hand 230, or physical objects 235, that are within a field of view along with virtual objects, such as virtual information or objects 240, 245 within extended reality content 225. In other examples, the extended reality application may render virtual representations of the portions of the user 220, the user's hand 230, and physical objects 235 that are within a field of view (e.g., render real-world objects as virtual objects) within extended reality content 225. In either example, user 220 is able to view the portions of the user 220, the user's hand 230, physical objects 235 and/or any other real-world objects or virtual content that are within a field of view within extended reality content 225. In other examples, the extended reality application may not render representations of the user 220 and the user's hand 230; the extended reality application may instead only render the physical objects 235 and/or virtual information or objects 240, 245.

In various embodiments, the client system 200 renders to extended reality system 205 extended reality content 225 in which virtual user interface 250 is locked relative to a position of the user 220, the user's hand 230, physical objects 235, or other virtual content in the extended reality environment. That is, the client system 205 may render a virtual user interface 250 having one or more virtual user interface elements at a position and orientation that are based on and correspond to the position and orientation of the user 220, the user's hand 230, physical objects 235, or other virtual content in the extended reality environment. For example, if a physical object is positioned in a vertical position on a table, the client system 205 may render the virtual user interface 250 at a location corresponding to the position and orientation of the physical object in the extended reality environment. Alternatively, if the user's hand 230 is within the field of view, the client system 200 may render the virtual user interface at a location corresponding to the position and orientation of the user's hand 230 in the extended reality environment. Alternatively, if other virtual content is within the field of view, the client system 200 may render the virtual user interface at a location corresponding to a general predetermined position of the field of view (e.g., a bottom of the field of view) in the extended reality environment. Alternatively, if other virtual content is within the field of view, the client system 200 may render the virtual user interface at a location corresponding to the position and orientation of the other virtual content in the extended reality environment. In this way, the virtual user interface 250 being rendered in the virtual environment may track the user 220, the user's hand 230, physical objects 235, or other virtual content such that the user interface appears, to the user, to be associated with the user 220, the user's hand 230, physical objects 235, or other virtual content in the extended reality environment.

As shown in FIGS. 2A and 2B, virtual user interface 250 includes one or more virtual user interface elements. Virtual user interface elements may include, for instance, a virtual drawing interface; a selectable menu (e.g., a drop-down menu); virtual buttons, such as button element 255; a virtual slider or scroll bar; a directional pad; a keyboard; other user-selectable user interface elements including glyphs, display elements, content, user interface controls, and so forth. The particular virtual user interface elements for virtual user interface 250 may be context-driven based on the current extended reality applications engaged by the user 220 or real-world actions/tasks being performed by the user 220. When a user performs a user interface gesture in the extended reality environment at a location that corresponds to one of the virtual user interface elements of virtual user interface 250, the client system 200 detects the gesture relative to the virtual user interface elements and performs an action associated with the gesture and the virtual user interface elements. For example, the user 220 may press their finger at a button element 255 location on the virtual user interface 250. The button element 255 and/or virtual user interface 250 location may or may not be overlaid on the user 220, the user's hand 230, physical objects 235, or other virtual content, e.g., correspond to a position in the physical environment, such as on a light switch or controller at which the client system 200 renders the virtual user interface button. In this example, the client system 200 detects this virtual button press gesture and performs an action corresponding to the detected press of a virtual user interface button (e.g., turns the light on). The client system 205 may also, for instance, animate a press of the virtual user interface button along with the button press gesture.

The client system 200 may detect user interface gestures and other gestures using an inside-out or outside-in tracking system of image capture devices and or external cameras. The client system 200 may alternatively, or in addition, detect user interface gestures and other gestures using a presence-sensitive surface. That is, a presence-sensitive interface of the extended reality system 205 and/or controller may receive user inputs that make up a user interface gesture. The extended reality system 205 and/or controller may provide haptic feedback to touch-based user interaction by having a physical surface with which the user can interact (e.g., touch, drag a finger across, grab, and so forth). In addition, peripheral extended reality system 205 and/or controller may output other indications of user interaction using an output device. For example, in response to a detected press of a virtual user interface button, extended reality system 205 and/or controller may output a vibration or "click" noise, or extended reality system 205 and/or controller may generate and output content to a display. In some examples, the user 220 may press and drag their finger along physical locations on the extended reality system 205 and/or controller corresponding to positions in the virtual environment at which the client system 205 renders virtual user interface elements of virtual user interface 250. In this example, the client system 205 detects this gesture and performs an action according to the detected press and drag of virtual user interface elements, such as by moving a slider bar in the virtual environment. In this way, client system 200 simulates movement of virtual content using virtual user interface elements and gestures.

Various embodiments disclosed herein may include or be implemented in conjunction with various types of extended reality systems. Extended reality content generated by the extended reality systems may include completely computer-generated content or computer-generated content combined with captured (e.g., real-world) content. The extended reality content may include video, audio, haptic feedback, or some combination thereof, any of which may be presented in a single channel or in multiple channels (e.g., stereo video that produces a 3D effect to the viewer). Additionally, in some embodiments, extended reality may also be associated with applications, products, accessories, services, or some combination thereof, that are used to, for example, create content in an extended reality and/or are otherwise used in (e.g., to perform activities in) an extended reality.

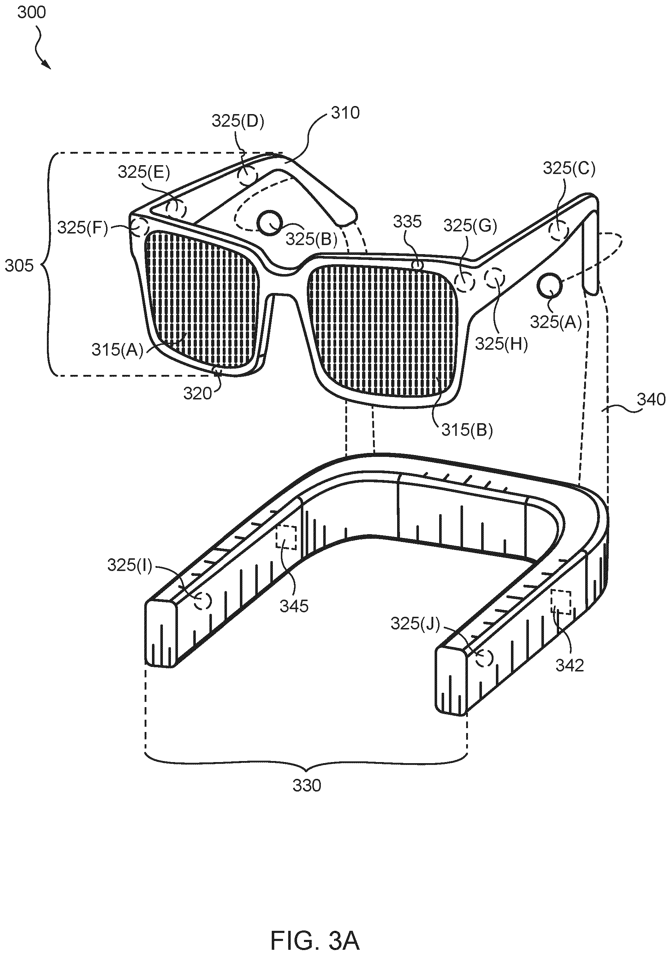

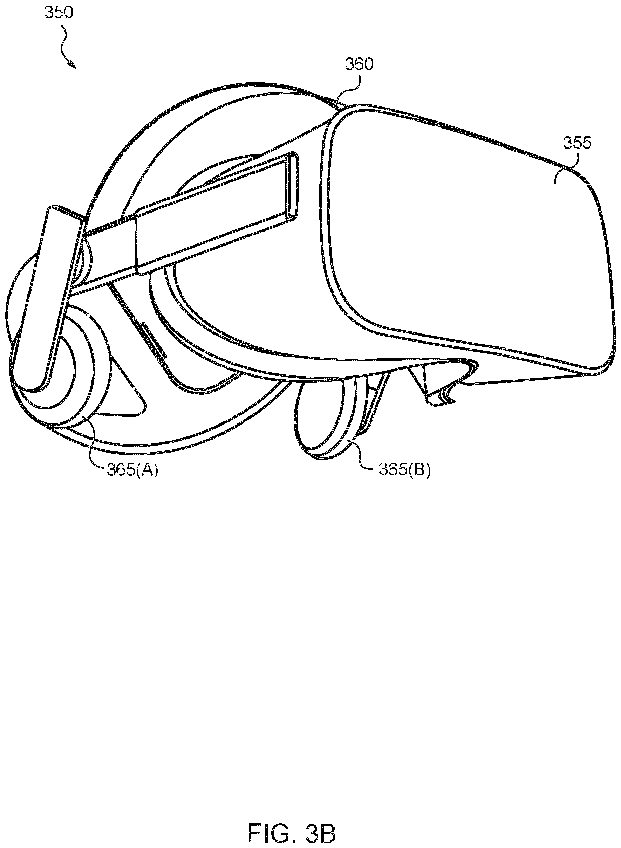

The extended reality systems may be implemented in a variety of different form factors and configurations. Some extended reality systems may be designed to work without near-eye displays (NEDs). Other extended reality systems may include an NED that also provides visibility into the real world (e.g., augmented reality system 300 in FIG. 3A) or that visually immerses a user in an extended reality (e.g., virtual reality system 350 in FIG. 3B). While some extended reality devices may be self-contained systems, other extended reality devices may communicate and/or coordinate with external devices to provide an extended reality experience to a user. Examples of such external devices include handheld controllers, mobile devices, desktop computers, devices worn by a user, devices worn by one or more other users, and/or any other suitable external system.

As shown in FIG. 3A, augmented reality system 300 may include an eyewear device 305 with a frame 310 configured to hold a left display device 315(A) and a right display device 315(B) in front of a user's eyes. Display devices 315(A) and 315(B) may act together or independently to present an image or series of images to a user. While augmented reality system 300 includes two displays, embodiments of this disclosure may be implemented in augmented reality systems with a single NED or more than two NEDs.

In some embodiments, augmented reality system 300 may include one or more sensors, such as sensor 320. Sensor 320 may generate measurement signals in response to motion of augmented reality system 300 and may be located on substantially any portion of frame 310. Sensor 320 may represent one or more of a variety of different sensing mechanisms, such as a position sensor, an inertial measurement unit (IMU), a depth camera assembly, a structured light emitter and/or detector, or any combination thereof. In some embodiments, augmented reality system 300 may or may not include sensor 320 or may include more than one sensor. In embodiments in which sensor 320 includes an IMU, the IMU may generate calibration data based on measurement signals from sensor 320. Examples of sensor 320 may include, without limitation, accelerometers, gyroscopes, magnetometers, other suitable types of sensors that detect motion, sensors used for error correction of the IMU, or some combination thereof.

In some examples, augmented reality system 300 may also include a microphone array with a plurality of acoustic transducers 325(A)-325(J), referred to collectively as acoustic transducers 325. Acoustic transducers 325 may represent transducers that detect air pressure variations induced by sound waves. Each acoustic transducer 325 may be configured to detect sound and convert the detected sound into an electronic format (e.g., an analog or digital format). The microphone array in FIG. 3A may include, for example, ten acoustic transducers: 325(A) and 325(B), which may be designed to be placed inside a corresponding ear of the user, acoustic transducers 325(C), 325(D), 325(E), 325(F), 325(G), and 325(H), which may be positioned at various locations on frame 310, and/or acoustic transducers 325(I) and 325(J), which may be positioned on a corresponding neckband 330.

In some embodiments, one or more of acoustic transducers 325(A)-(J) may be used as output transducers (e.g., speakers). For example, acoustic transducers 325(A) and/or 325(B) may be earbuds or any other suitable type of headphone or speaker. The configuration of acoustic transducers 325 of the microphone array may vary. While augmented reality system 300 is shown in FIG. 3A as having ten acoustic transducers, the number of acoustic transducers 325 may be greater or less than ten. In some embodiments, using higher numbers of acoustic transducers 325 may increase the amount of audio information collected and/or the sensitivity and accuracy of the audio information. In contrast, using a lower number of acoustic transducers 325 may decrease the computing power required by an associated controller 335 to process the collected audio information. In addition, the position of each acoustic transducer 325 of the microphone array may vary. For example, the position of an acoustic transducer 325 may include a defined position on the user, a defined coordinate on frame 310, an orientation associated with each acoustic transducer 325, or some combination thereof.

The acoustic transducers 325(A) and 325(B) may be positioned on different parts of the user's ear, such as behind the pinna, behind the tragus, and/or within the auricle or fossa. Alternatively, or additionally, there may be additional acoustic transducers 325 on or surrounding the ear in addition to acoustic transducers 325 inside the ear canal. Having an acoustic transducer 325 positioned next to an ear canal of a user may enable the microphone array to collect information on how sounds arrive at the ear canal. By positioning at least two of acoustic transducers 325 on either side of a user's head (e.g., as binaural microphones), augmented reality system 300 may simulate binaural hearing and capture a 3D stereo sound field around a user's head. In some embodiments, acoustic transducers 325(A) and 325(B) may be connected to augmented reality system 300 via a wired connection 340, and in other embodiments acoustic transducers 325(A) and 325(B) may be connected to augmented reality system 300 via a wireless connection (e.g., a Bluetooth connection). In still other embodiments, acoustic transducers 325(A) and 325(B) may not be used at all in conjunction with augmented reality system 300.

The acoustic transducers 325 on frame 310 may be positioned in a variety of different ways, including along the length of the temples, across the bridge, above or below display devices 315(A) and 315(B), or some combination thereof. Acoustic transducers 325 may also be oriented such that the microphone array is able to detect sounds in a wide range of directions surrounding the user wearing the augmented reality system 300. In some embodiments, an optimization process may be performed during manufacturing of augmented reality system 300 to determine relative positioning of each acoustic transducer 325 in the microphone array.

In some examples, augmented reality system 300 may include or be connected to an external device (e.g., a paired device), such as neckband 330. Neckband 330 generally represents any type or form of paired device. Thus, the following discussion of neckband 330 may also apply to various other paired devices, such as charging cases, smart watches, smart phones, wrist bands, other wearable devices, hand-held controllers, tablet computers, laptop computers, and/or other external computing devices.

As shown, neckband 330 may be coupled to eyewear device 305 via one or more connectors. The connectors may be wired or wireless and may include electrical and/or non-electrical (e.g., structural) components. In some cases, eyewear device 305 and neckband 330 may operate independently without any wired or wireless connection between them. While FIG. 3A illustrates the components of eyewear device 305 and neckband 330 in example locations on eyewear device 305 and neckband 330, the components may be located elsewhere and/or distributed differently on eyewear device 305 and/or neckband 330. In some embodiments, the components of eyewear device 305 and neckband 330 may be located on one or more additional peripheral devices paired with eyewear device 305, neckband 330, or some combination thereof.

Pairing external devices, such as neckband 330, with augmented reality eyewear devices may enable the eyewear devices to achieve the form factor of a pair of glasses while still providing sufficient battery and computation power for expanded capabilities. Some or all of the battery power, computational resources, and/or additional features of augmented reality system 300 may be provided by a paired device or shared between a paired device and an eyewear device, thus reducing the weight, heat profile, and form factor of the eyewear device overall while still retaining desired functionality. For example, neckband 330 may allow components that would otherwise be included on an eyewear device to be included in neckband 330 since users may tolerate a heavier weight load on their shoulders than they would tolerate on their heads. Neckband 330 may also have a larger surface area over which to diffuse and disperse heat to the ambient environment. Thus, neckband 330 may allow for greater battery and computation capacity than might otherwise have been possible on a stand-alone eyewear device. Since weight carried in neckband 330 may be less invasive to a user than weight carried in eyewear device 305, a user may tolerate wearing a lighter eyewear device and carrying or wearing the paired device for greater lengths of time than a user would tolerate wearing a heavy standalone eyewear device, thereby enabling users to incorporate extended reality environments more fully into their day-to-day activities.

The neckband 330 may be communicatively coupled with eyewear device 305 and/or to other devices. These other devices may provide certain functions (e.g., tracking, localizing, depth mapping, processing, storage) to augmented reality system 300. In the embodiment of FIG. 3A, neckband 330 may include two acoustic transducers (e.g., 325(I) and 325(J)) that are part of the microphone array (or potentially form their own microphone subarray). Neckband 330 may also include a controller 342 and a power source 345.

The acoustic transducers 325(I) and 325(J) of neckband 330 may be configured to detect sound and convert the detected sound into an electronic format (analog or digital). In the embodiment of FIG. 3A, acoustic transducers 325(I) and 325(J) may be positioned on neckband 330, thereby increasing the distance between the neckband acoustic transducers 325(I) and 325(J) and other acoustic transducers 325 positioned on eyewear device 305. In some cases, increasing the distance between acoustic transducers 325 of the microphone array may improve the accuracy of beamforming performed via the microphone array. For example, if a sound is detected by acoustic transducers 325(C) and 325(D) and the distance between acoustic transducers 325(C) and 325(D) is greater than, e.g., the distance between acoustic transducers 325(D) and 325(E), the determined source location of the detected sound may be more accurate than if the sound had been detected by acoustic transducers 325(D) and 325(E).

The controller 342 of neckband 330 may process information generated by the sensors on neckband 330 and/or augmented reality system 300. For example, controller 342 may process information from the microphone array that describes sounds detected by the microphone array. For each detected sound, controller 342 may perform a direction-of-arrival (DOA) estimation to estimate a direction from which the detected sound arrived at the microphone array. As the microphone array detects sounds, controller 342 may populate an audio data set with the information. In embodiments in which augmented reality system 300 includes an inertial measurement unit, controller 342 may compute all inertial and spatial calculations from the IMU located on eyewear device 305. A connector may convey information between augmented reality system 300 and neckband 330 and between augmented reality system 300 and controller 342. The information may be in the form of optical data, electrical data, wireless data, or any other transmittable data form. Moving the processing of information generated by augmented reality system 300 to neckband 330 may reduce weight and heat in eyewear device 305, making it more comfortable to the user.

The power source 345 in neckband 330 may provide power to eyewear device 305 and/or to neckband 330. Power source 345 may include, without limitation, lithium-ion batteries, lithium-polymer batteries, primary lithium batteries, alkaline batteries, or any other form of power storage. In some cases, power source 345 may be a wired power source. Including power source 345 on neckband 330 instead of on eyewear device 305 may help better distribute the weight and heat generated by power source 345.

As noted, some extended reality systems may, instead of blending an extended reality with actual reality, substantially replace one or more of a user's sensory perceptions of the real world with a virtual experience. One example of this type of system is a head-worn display system, such as virtual reality system 350 in FIG. 3B, that mostly or completely covers a user's field of view. Virtual reality system 350 may include a front rigid body 355 and a band 360 shaped to fit around a user's head. Virtual reality system 350 may also include output audio transducers 365(A) and 365(B). Furthermore, while not shown in FIG. 3B, front rigid body 355 may include one or more electronic elements, including one or more electronic displays, one or more inertial measurement units (IMUs), one or more tracking emitters or detectors, and/or any other suitable device or system for creating an extended reality experience.

Extended reality systems may include a variety of types of visual feedback mechanisms. For example, display devices in augmented reality system 300 and/or virtual reality system 350 may include one or more liquid crystal displays (LCDs), light emitting diode (LED) displays, organic LED (OLED) displays, digital light project (DLP) micro-displays, liquid crystal on silicon (LCoS) micro-displays, and/or any other suitable type of display screen. These extended reality systems may include a single display screen for both eyes or may provide a display screen for each eye, which may allow for additional flexibility for varifocal adjustments or for correcting a user's refractive error. Some of these extended reality systems may also include optical subsystems having one or more lenses (e.g., conventional concave or convex lenses, Fresnel lenses, adjustable liquid lenses) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (e.g., a single lens configuration that directly collimates light but results in so-called pincushion distortion) and/or a pupil-forming architecture (e.g., a multi-lens configuration that produces so-called barrel distortion to nullify pincushion distortion).

In addition to or instead of using display screens, some of the extended reality systems described herein may include one or more projection systems. For example, display devices in augmented reality system 300 and/or virtual reality system 350 may include micro-LED projectors that project light (using, e.g., a waveguide) into display devices, such as clear combiner lenses that allow ambient light to pass through. The display devices may refract the projected light toward a user's pupil and may enable a user to simultaneously view both extended reality content and the real world. The display devices may accomplish this using any of a variety of different optical components, including waveguide components (e.g., holographic, planar, diffractive, polarized, and/or reflective waveguide elements), light-manipulation surfaces and elements (e.g., diffractive, reflective, and refractive elements and gratings), and/or coupling elements. Extended reality systems may also be configured with any other suitable type or form of image projection system, such as retinal projectors used in virtual retina displays.

The extended reality systems described herein may also include various types of computer vision components and subsystems. For example, augmented reality system 300 and/or virtual reality system 350 may include one or more optical sensors, such as 2D or 3D cameras, structured light transmitters and detectors, time-of-flight depth sensors, single-beam or sweeping laser rangefinders, 3D LiDAR sensors, and/or any other suitable type or form of optical sensor. An extended reality system may process data from one or more of these sensors to identify a location of a user, to map the real world, to provide a user with context about real-world surroundings, and/or to perform a variety of other functions.

The extended reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the extended reality systems described herein may also include tactile (e.g., haptic) feedback systems, which may be incorporated into headwear, gloves, body suits, handheld controllers, environmental devices (e.g., chairs, floormats), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other extended reality devices, within other extended reality devices, and/or in conjunction with other extended reality devices.

By providing haptic sensations, audible content, and/or visual content, extended reality systems may create an entire virtual experience or enhance a user's real-world experience in a variety of contexts and environments. For instance, extended reality systems may assist or extend a user's perception, memory, or cognition within a particular environment. Some systems may enhance a user's interactions with other people in the real world or may enable more immersive interactions with other people in a virtual world. Extended reality systems may also be used for educational purposes (e.g., for teaching or training in schools, hospitals, government organizations, military organizations, business enterprises), entertainment purposes (e.g., for playing video games, listening to music, watching video content), and/or for accessibility purposes (e.g., as hearing aids, visual aids). The embodiments disclosed herein may enable or enhance a user's extended reality experience in one or more of these contexts and environments and/or in other contexts and environments.

As noted, extended reality systems 300 and 350 may be used with a variety of other types of devices to provide a more compelling extended reality experience. These devices may be haptic interfaces with transducers that provide haptic feedback and/or that collect haptic information about a user's interaction with an environment. The extended reality systems disclosed herein may include various types of haptic interfaces that detect or convey various types of haptic information, including tactile feedback (e.g., feedback that a user detects via nerves in the skin, which may also be referred to as cutaneous feedback) and/or kinesthetic feedback (e.g., feedback that a user detects via receptors located in muscles, joints, and/or tendons).

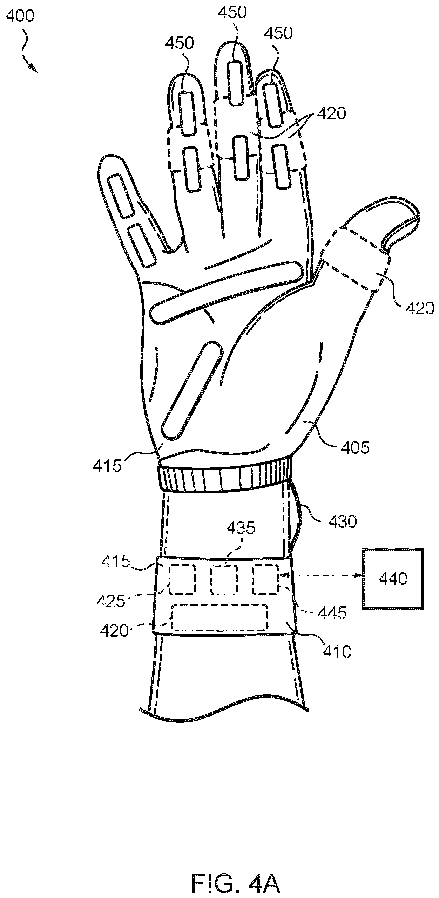

Haptic feedback may be provided by interfaces positioned within a user's environment (e.g., chairs, tables, floors) and/or interfaces on articles that may be worn or carried by a user (e.g., gloves, wristbands). As an example, FIG. 4A illustrates a vibrotactile system 400 in the form of a wearable glove (haptic device 405) and wristband (haptic device 410). Haptic device 405 and haptic device 410 are shown as examples of wearable devices that include a flexible, wearable textile material 415 that is shaped and configured for positioning against a user's hand and wrist, respectively. This disclosure also includes vibrotactile systems that may be shaped and configured for positioning against other human body parts, such as a finger, an arm, a head, a torso, a foot, or a leg. By way of example and not limitation, vibrotactile systems according to various embodiments of the present disclosure may also be in the form of a glove, a headband, an armband, a sleeve, a head covering, a sock, a shirt, or pants, among other possibilities. In some examples, the term "textile" may include any flexible, wearable material, including woven fabric, non-woven fabric, leather, cloth, a flexible polymer material, composite materials, etc.

One or more vibrotactile devices 420 may be positioned at least partially within one or more corresponding pockets formed in textile material 415 of vibrotactile system 400. Vibrotactile devices 420 may be positioned in locations to provide a vibrating sensation (e.g., haptic feedback) to a user of vibrotactile system 400. For example, vibrotactile devices 420 may be positioned against the user's finger(s), thumb, or wrist, as shown in FIG. 4A. Vibrotactile devices 420 may, in some examples, be sufficiently flexible to conform to or bend with the user's corresponding body part(s).

A power source 425 (e.g., a battery) for applying a voltage to the vibrotactile devices 420 for activation thereof may be electrically coupled to vibrotactile devices 420, such as via conductive wiring 430. In some examples, each of vibrotactile devices 420 may be independently electrically coupled to power source 425 for individual activation. In some embodiments, a processor 435 may be operatively coupled to power source 425 and configured (e.g., programmed) to control activation of vibrotactile devices 420.

The vibrotactile system 400 may be implemented in a variety of ways. In some examples, vibrotactile system 400 may be a standalone system with integral subsystems and components for operation independent of other devices and systems. As another example, vibrotactile system 400 may be configured for interaction with another device or system 440. For example, vibrotactile system 400 may, in some examples, include a communications interface 445 for receiving and/or sending signals to the other device or system 440. The other device or system 440 may be a mobile device, a gaming console, an extended reality (e.g., virtual reality, augmented reality, mixed reality) device, a personal computer, a tablet computer, a network device (e.g., a modem, a router), and a handheld controller. Communications interface 445 may enable communications between vibrotactile system 400 and the other device or system 440 via a wireless (e.g., Wi-Fi, Bluetooth, cellular, radio) link or a wired link. If present, communications interface 445 may be in communication with processor 435, such as to provide a signal to processor 435 to activate or deactivate one or more of the vibrotactile devices 420.

The vibrotactile system 400 may optionally include other subsystems and components, such as touch-sensitive pads 450, pressure sensors, motion sensors, position sensors, lighting elements, and/or user interface elements (e.g., an on/off button, a vibration control element). During use, vibrotactile devices 420 may be configured to be activated for a variety of different reasons, such as in response to the user's interaction with user interface elements, a signal from the motion or position sensors, a signal from the touch-sensitive pads 450, a signal from the pressure sensors, and a signal from the other device or system 440.

Although power source 425, processor 435, and communications interface 445 are illustrated in FIG. 4A as being positioned in haptic device 410, the present disclosure is not so limited. For example, one or more of power source 425, processor 435, or communications interface 445 may be positioned within haptic device 405 or within another wearable textile.

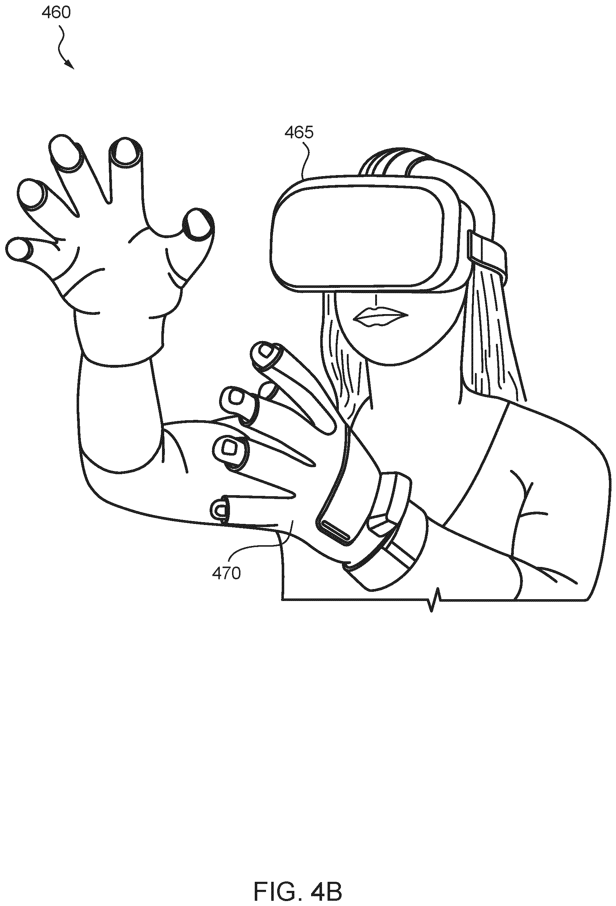

Haptic wearables, such as those shown in and described in connection with FIG. 4A, may be implemented in a variety of types of extended reality systems and environments. FIG. 4B shows an example extended reality environment 460 including one head-mounted virtual reality display and two haptic devices (e.g., gloves), and in other embodiments any number and/or combination of these components and other components may be included in an extended reality system. For example, in some embodiments, there may be multiple head-mounted displays each having an associated haptic device, with each head-mounted display, and each haptic device communicating with the same console, portable computing device, or other computing system.

In FIG. 4B, the head-mounted-display (HMD) 465 generally represents any type or form of virtual reality system, such as virtual reality system 350 in FIG. 3B. Likewise, the haptic device 470 generally represents any type or form of wearable device, worn by a user of an extended reality system, that provides haptic feedback to the user to give the user the perception that he or she is physically engaging with a virtual object. In some embodiments, haptic device 470 may provide haptic feedback by applying vibration, motion, and/or force to the user. For example, haptic device 470 may limit or augment a user's movement. To give a specific example, haptic device 470 may limit a user's hand from moving forward so that the user has the perception that his or her hand has come in physical contact with a virtual wall. In this specific example, one or more actuators within the haptic device may achieve the physical-movement restriction by pumping fluid into an inflatable bladder of the haptic device. In some examples, a user may also use haptic device 470 to send action requests to a console. Examples of action requests include, without limitation, requests to start an application and/or end the application and/or requests to perform a particular action within the application.

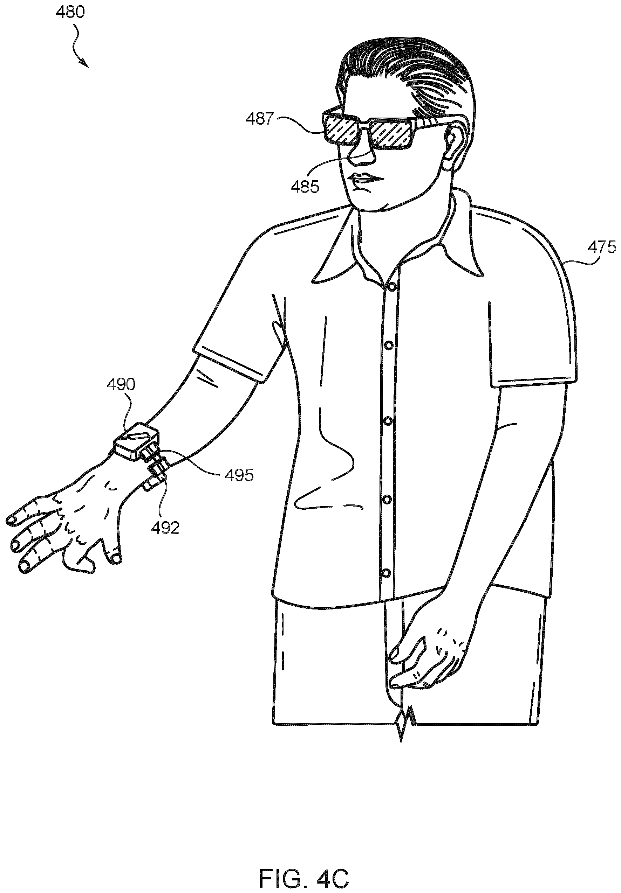

While haptic interfaces may be used with virtual reality systems, as shown in FIG. 4B, haptic interfaces may also be used with augmented reality systems, as shown in FIG. 4C. FIG. 4C is a perspective view of a user 475 interacting with an augmented reality system 480. In this example, user 475 may wear a pair of augmented reality glasses 485 that may have one or more displays 487 and that are paired with a haptic device 490. In this example, haptic device 490 may be a wristband that includes a plurality of band elements 492 and a tensioning mechanism 495 that connects band elements 492 to one another.

One or more of the band elements 492 may include any type or form of actuator suitable for providing haptic feedback. For example, one or more of band elements 492 may be configured to provide one or more of various types of cutaneous feedback, including vibration, force, traction, texture, and/or temperature. To provide such feedback, band elements 492 may include one or more of various types of actuators. In one example, each of band elements 492 may include a vibrotactor (e.g., a vibrotactile actuator) configured to vibrate in unison or independently to provide one or more of various types of haptic sensations to a user. Alternatively, only a single band element or a subset of band elements may include vibrotactors.

The haptic devices 405, 410, 470, and 490 may include any suitable number and/or type of haptic transducer, sensor, and/or feedback mechanism. For example, haptic devices 405, 410, 470, and 490 may include one or more mechanical transducers, piezoelectric transducers, and/or fluidic transducers. Haptic devices 405, 410, 470, and 490 may also include various combinations of different types and forms of transducers that work together or independently to enhance a user's extended reality experience. In one example, each of band elements 492 of haptic device 490 may include a vibrotactor (e.g., a vibrotactile actuator) configured to vibrate in unison or independently to provide one or more various types of haptic sensations to a user.

### AI-Generated Context-Relevant Action Recommendations for Achieving High-Level Goals

The use of AI may be advantageously utilized to help persons achieve various goals. AI may be particularly (but not necessarily exclusively) apt at assisting persons with accomplishing high-level goals, which are commonly associated with a number of sub-goals and corresponding actions. For example, a user may desire to lose weight or to learn a new language, but may not know how to begin or pursue such a goal in a way that is personally suitable. This often results in no real attempt to achieve a goal or to ultimately failing in the effort. As an example, New Year's resolutions frequently go unfulfilled either because the resolution-maker lacked the knowledge or initiative to embark on the goal or the knowledge or initiative to ultimately complete the goal. Many factors can impact whether, how, and to what extent a person succeeds at achieving a given high-level goal, including the ability set sub-goals and to properly plan required actions in a realistic and feasible manner. The sufficiency and timing of interventions that the person receives during the process of pursuing a goal can also influence the outcome. For example, breaking down a high-level goal into realistic sub-goals and corresponding actions can require a person to realistically consider their physical or mental capabilities, time constraints, monetary constraints, and/or other factors relative to the context of the goal. Seeking ways in which to receive effective goal-oriented interventions such as reminders or nudging at contextually-relevant moments may also be beneficial.

Context-aware computing, such as context-aware Al, has the potential to understand different facets about the contexts and constraints associated with the goals of a user. This understanding can be used to recommend feasible actions that can help a user achieve their goals, where the recommended actions are grounded in the associated context and constraints. For example, extended reality (XR) technologies involving wearable devices such as headsets or glasses can be utilized. The wearable devices can be used to supply context (e.g., captured images of a user's surroundings) to an AI computing system including one or more AI models that can resultantly deliver real-time action recommendations to the user, where the action recommendations correspond to a goal of the user and are based on user context (e.g., the context of the user's current environment and/or activity). In a different approach, other electronic devices such as smart phones, smart watches, tablets, etc., can instead be used to supply context (e.g., user location, user motion, user activity) to an AI model that can resultantly deliver action recommendations to the user in a similar manner. For example, the AI model may have previously recommended to a user, and the user may have accepted, a recipe that furthers a high-level user goal of eating healthier. The AI model may also be aware, from previous user input, communication with a smart appliance (e.g., refrigerator) or otherwise, that the user lacks certain ingredients for the recipe. Thus, if a smartphone of the user indicates to the AI model that the user is in or near a grocery store, the AI model may recommend, via the smartphone, that the user purchase the missing ingredients.

Traditional recommendation techniques can include, for example, collaborative filtering (i.e., recommending by matching a user with other users) and content-based filtering (i.e., recommending based on previous activities of the user). However, these techniques have not been utilized for the purpose of generating suggestions to shape or change user behavior relative to achieving high-level goals. Traditional recommender systems would also need to deal with the "cold-start problem" for every new context the system takes into account, which can make traditional recommendation techniques less scalable for context-relevant recommendations for high-level goals.

In some examples of an AI action recommendation system, such problems may be overcome by utilizing large language models (LLMs) as the one or more AI models. LLMs are typically grounded in vast amounts of knowledge contained in text corpora on which the models were trained, and have proven to be effective at generalizing to a number of tasks such as programming and summarizing text. LLMs have also proven to be effective at understanding prompts comprising different types of information, such as natural language user utterances and information captured by various types of hardware and sensors, and subsequently using the prompt information to effectively perform a variety of tasks. LLMs can also be used in recommender systems and may be trained to output pre-existing recommendations and also to generate new recommendations that are adapted to user contexts and constraints. However, LLMs have not been previously developed or used to assist users with achieving high-level goals, whereby the LLMs are required to properly utilize user context in order to deliver recommendations to users in an accurate and effective manner.

Training an LLM to assist users with achieving high-level goals can require training the LLM to understand how to dissect high-level goals into multiple sub-goals and associated actions. Training an LLM to assist users with achieving high-level goals can require training the LLM to understand how users experience and react to AI action recommendations for high-level goals. Training an LLM to assist users with achieving high-level goals can require determining and understanding what roles (including social roles) AI-generated recommendations should play in a user pursuits of high-level goals.

### 1. Study

As part of developing LLM-based virtual assistants according to the present disclosure, a study was conducted. One goal of the study was to determine how users would perceive the difference between pursuing high-level goals with the assistance of AI-generated contextualized action recommendations versus pursuing the same high-level goals through their existing/typical goal-achieving methods. Another goal of the study was to determine how AI-generated contextualized action recommendations in support of achieving high-level goals can best be delivered to users, including whether it matters if suggestions are presented with different social roles. The study effectively demonstrated through one use case example that an AI action recommendation system utilizing one or more LLMs can be an effective tool to help users achieve high-level goals.

In developing the study, it was considered that the Fogg Behavior Model (FBM), suggests three things must be present in order to cause a person to perform an action: (1) sufficient motivation; (2) the ability to perform the action, and (3) a trigger for initiating the action. It has also been suggested that persons are more likely to achieve their goals if they have specific and short-term targets, even for goals that are more difficult to attain, and that opportunistic timing can act as a trigger toward goal-based action. Consequently, one approach used during the study was to cause an LLM to provide context-aware action recommendations that would motivate the users and reveal opportunities for advancing toward their goals by introducing environmental triggers for short-term targeted actions where sufficient triggers do not yet exist.

It is also understood that there is potential value in providing "just-in-time" interventions or recommendations to facilitate high-level goal completion. "Just-in-time," as used here, refers to providing a user with recommendations or otherwise intervening during the precise moments or contexts in which they can make a difference. These moments can include both "states of vulnerability", when persons are likely to perform an action that moves them away from their goal (e.g., smoke a cigarette when their goal is to quit smoking), and "states of opportunity", when persons are in a setting or environment (context) during which an action that would result in meaningful progress toward their goal can easily and feasibly be performed. Thus, there can be value in identifying these moments of vulnerability and opportunity, and providing relevant recommendations or other interventions during these moments.

These approaches rely on a sufficient understanding of the user context, which is not always easy to define. Context can play a role in defining the actions a user can take toward achieving their goals. For example, if a user is driving a vehicle, the user cannot follow a recommendation to perform an exercise. Therefore, the user context can contribute significantly to the way the user reacts to a provided recommendation, and the study was conducted with that in mind.

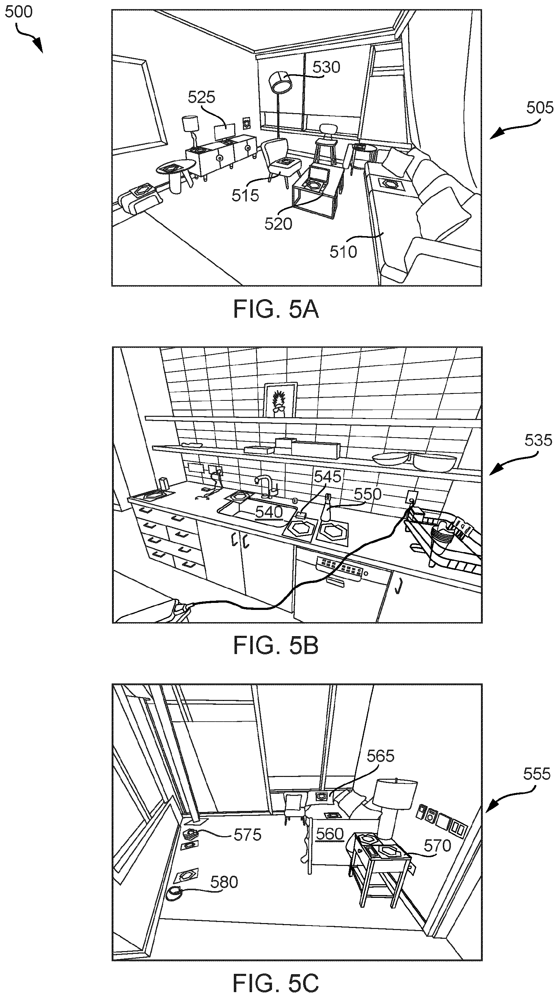

To make the determinations of interest in view of the above-identified considerations, a medium-fidelity prototype AI action recommendation system was developed and used to deliver to study participants, contextualized action recommendations generated by an LLM and delivered via an augmented reality (AR) virtual assistant. In support of the study, and as represented in FIGS. 5A-5C, a lab environment in the form of a mock studio apartment 500 was created and supplied with a set of objects expected to be familiar to the users participating in the study. The mock apartment included different rooms, which were used to create different scenes for the study. For example, FIG. 5A depicts a living room 505 of the mock apartment 500 and is shown to include various objects such as a sofa 510, a chair 515, a table 520, a television 525, and a lamp 530. FIG. 5B depicts a kitchen 535 of the mock apartment 500 and is shown to include various objects such as a sink 540, a dishware scrubbing pad 545, and soap 550. FIG. 5C depicts a bedroom 555 of the mock apartment 500 and is shown to include various objects such as a bed 560, pillows 565, a table 570, dumbbells 575, and a jump rope 580. As may be observed, each of the rooms 505, 535 555 also include other objects that could be, but were not required to be, used in the study.

The LLM of the prototype AI action recommendation system was trained to provide the study users with action recommendations pre-generated by the LLM using varying combinations of pre-set goals related to the various objects located in the mock apartment 500. This was intended to simulate the manner in which an LLM-based AI action recommendation system can help real-world users discover possible actions for achieving their high-level goals within the context of their typical living spaces and through use of the types of objects commonly located therein. For purposes of the study, the various pre-set goals were "improve fitness," "be more eco-friendly," "tidy up the home," "improve mental health," "connect with friends," "learn a new language," and "learn a new skill." For purposes of the study, the LLM used to pre-generate the action recommendations was GPT-3.5. Examples of expected outputs were included in prompts to the LLM and the prompts instructed the LLM to output both recommended actions and reasoning for the outputted action recommendations. The prototype system was designed such that after study participants selected their goals of interest, action recommendations relevant to those goals were selected from a pre-generated JSON configuration database and outputted by the LLM. The contextualization of the action recommendations had a two-folded meaning in the study: (1) the action recommendations were generated by an LLM of the prototype AI action recommendation system as prompted with the goals of the users and the objects in the virtual apartment, and (2) the delivery of the action recommendations was contextualized with AR interfaces that anchored the recommendations onto the environment.

The prototype AI action recommendation system was implemented in Unity and run on a Microsoft HoloLens 2, with tracking of the objects within the space of the mock apartment accomplished by detecting fiducial markers attached to the objects using the Vuforia Engine. The study was intended to replicate the manner in which a developed LLM-based AI action recommendation system might observe a user's environment to obtain context (e.g., by using image capture performed by a wearable device such as smart glasses) and present the action recommendations to a user. In this case, given that the LLM-based prototype AI action recommendation system used VR technology, the action recommendations generated by the LLM-based prototype AI action recommendation system were displayed in a given scene near the relevant object(s) within a field of view of the user. Each action recommendation included (1) an action description/instruction and an identification of one or more high-level goals to be advanced by performing the action. The prototype system is only one example of an LLM-based AI action recommendation system that can be used to generate and provide users with contextualized recommendations in support of high-level goal achievement, and is not to be considered in any way limiting. In fact, as described in more detail below, LLM-based AI action recommendation systems that do not rely on extended reality can also be successfully used for this purpose.

A total of 39 participants were recruited for the study. The participants included a mixture of genders, ages, and ethnicities. The participants were asked to experience the prototype system for at least three of the pre-set goals that they were actively pursuing or were interested in for the purpose of configuring the prototype to deliver recommendations based on the real goals of the participants. The participants were also interviewed to obtain an understanding of the ways in which they currently achieve their high-level goals (e.g., where and how they seek advice, information, ideas, and motivation for their goals) for the purpose of establishing a baseline against which their experience with the AI system could be later compared. To answer the question regarding how participants experience and perceive action recommendations from different social sources, the LLM-generated recommendations were presented to the participants as being provided by Al, by an expert, or as suggestions of friends. Each participant experienced one of these conditions only (between-subjects design).

Participant interview data was analyzed through open, axial, and selective coding. Open codes included categories such as `users valuing the automatic and passive nature of contextualized action recommendations', `passive action recommendations helping users discover action possibilities', 'users' tendencies to accept familiar actions', and `users trusting AI-generated recommendations more for less-critical domains'. Axial codes included categories such as 'when, where, and how recommendations are delivered', `personalization of recommendations', `users accepting or rejecting recommendations based on their anticipated level of effort, friction, or benefit', and `user perceptions of AI-generated recommendations'. From these, we landed on selective codes which include the higher-level themes of `delivery and presentation of contextualized action recommendations', `personalization, relevance, and creativity of recommendations', 'decision making on which recommendations to follow', and `sources of action recommendations.' That answers of the participants to the survey/interview questions were also analyzed and compared across the three groups (AI, experts, and friends/family).

The study allowed for direct observation of user interaction with an LLM-based AI action recommendation system virtual assistant and identification of the types and timing of recommendations that were most preferred by the users. For example, it was learned from the study that the participants placed value on receiving the contextualized action recommendations automatically/proactively (i.e., initiated by the system, rather than by the user) rather than having to actively seek out advice regarding actions to achieve their high-level goals from sources such as their friends and family, domain experts such as therapists and coaches, articles, books, blogs, peer-reviewed journals, and social media. It was also learned that the participants valued that the action recommendations were grounded in the context of their current environment and/or activity, and were relevant to what they could feasibly accomplish in the current moment, even when the only context cue being considered by the system was the objects available for use by the participants to complete an action. The participants valued that the contextualization of the recommendations resulted in the recommendations being delivered `just in time'. Some participants compared the proactive action recommendations to existing environmental cues that they use as reminders to do an activity - for example, using dirty dishes in a kitchen sink as an `environmental cue' to wash the dishes. This indicates that object-based contextualized recommendations could serve to nudge users to perform actions that do not normally have such natural environmental cues. The participants mentioned that this could save them time or help them be more productive in situations where they do not have much mental energy to brainstorm ideas for actions to take.

In the study, the prototype AI action recommendation system only delivered recommendations that were triggered by the context cue of available objects. However, at least some of the participants agreed that there were other context cues that might be useful in triggering more relevant action recommendations. For instance, the current mood of the user, the location of the user, the time of day, and the identity of other persons present in the space, were all viewed as potentially relevant context factors. In addition, some of the participants agreed that the qualities of an object itself could be considered as a relevant context factor.

Participants found that grounding the action recommendations to the available objects in the home was an effective way to personalize the recommendations, as the action recommendations could be tailored to their personal contexts. The participants also found some of the AI-generated recommendations in the study to contain creative ideas. For some, this aided in the discovery of new action ideas for achieving their goals that had not been previously considered. In other cases, participants said that the AI-generated recommendations would help draw their attention toward objects in their home that they would normally overlook, with the realization that they could use those objects as tools for working toward their high-level goals.

In some instances, even if a participant did not want to accept a recommended action as written, the participant was still made aware of the possibilities of actions that can be performed with objects currently present in their households, and were inspired to think of new ways they could use these objects to help achieve their high-level goals. While participants valued the contextualized and passive nature of the action recommendations, there was also some preference for limiting the number of recommendations presented at the same time. This suggests a possible benefit to minimizing or optimizing in a smart way the number of action recommendations a user is presented with at any one time, as well as a benefit to delivering recommendations at the precise moments when they can have a meaningful impact on the pursuit of corresponding high-level goals of the user. For example, users may not require recommendations for actions that they already habitually perform, unless they serve merely as a reminder or a nudge. Some of the participants also felt that the contextualized action recommendations were more useful to new goals, or for exploring new ways to pursue existing goals, perhaps due to a change in context (e.g., being in a hotel room rather than one's own home), a change in interests, or trying to remap existing goals and habits to complement another new user goal.

A goal of the study was to determine how participants decide which contextualized action recommendations to adopt and which ones to ignore or dismiss, as understanding this can be useful in helping to determine which recommended actions should be prioritized for display to the user. The study indicated that the participants' decision-making processes in this regard were based essentially on four key factors: (1) the perceived effort or friction of performing an action, (2) the perceived usefulness of the action, (3) the familiarity of the user with the action, and (4) the interest of the user in the action (or perceived short-term happiness from performing the action). In this regard, the participants tended to prefer actions that were perceived to be easy - i.e., actions that required low effort to perform, or low friction to get started (e.g., few financial barriers or time needed to setup or prepare to do the action), and/or actions where only a minimal commitment of time was required to complete the action. Time was often the most common participant concern. The participants also often preferred to accept actions that have proven to work for them in the past, or actions that are similar to those that have worked for them in the past.

The participants have often tried to determine the usefulness or effort associated with a recommended action based on their own past experience, from research into what actions or techniques others have done, or from the perspectives of their close social ties. However, this frequently proved difficult for actions that were new to the participant. For this reason, the participants tended to frequently accept recommended actions that were already familiar to them based on past personal performance or based on an observed performance by others.

The participants mentioned that seeing action recommendations at their own pace could make them more aware of their existing habits, as well as of the possibility of broader actions outside of their existing habits that might be undertaken to achieve their high-level goals using already available tools. The participants additionally mentioned that they often gravitate toward the usual objects that they routinely use, or toward existing habits. This tendency to rely on existing habits can affect the type of contextual cues (in this case, available objects) the system picks up, as the existing habits and routines of a user may limit the scope of the environments and activities the user becomes involved with, including what tools are available to the user (and/or detected by the system) for performing actions.

The study participants also tended to accept action recommendations that sparked their interest, or that they anticipated would make them happy in the short term. Some of the participants tried to balance this short-term happiness with the long-term usefulness or effectiveness of the recommended action on their high-level goal.

During the study, the identified social roles associated with the source of the action recommendations significantly affected the perceptions and experiences of the participants, even though the participants knew that all the action recommendations were actually generated by AI rather than an expert or a friend or family member. No significant difference was found between the perceived trust of the three hypothetical recommendation sources. When the action recommendations were portrayed as coming from AI and big data, the participants were open to their creativity for some goals such as less critical or sensitive goals (e.g., domains that were not related to physical or mental health). When the recommendations were portrayed as coming from close social ties of the participants, the participants felt motivated. When the recommendations were portrayed as coming from domain experts, the participants sometimes found the advice to be not particularly impressive or useful if it was not specific enough (i.e., if it was too generalized), but trusted expert advice more for more sensitive domains like fitness and mental health. This suggests that the participants were not overly impressed by "generalized" (i.e., nonspecific) action recommendations labelled as coming from experts, and indicates that individuals may tend to expect more specific advice from experts, more tailored to the specific needs and circumstances of the individual, and may be less interested when they do not receive such specific advice.

The study also revealed that the participants perceived the action recommendations to be significantly more personalized when the action recommendations were labelled as coming from their close social ties than when the action recommendations that were labelled as coming from another source. This suggests that the study participants particularly trusted that their close social ties are more likely to give them advice that is personalized and specific, as their close social ties "know them better." Even though no statistically-significant difference between friends/family and experts in perceived personalization was found, many participants stated that they trust the personal experiences of their close social ties, sometimes more than the professional experience of experts. However, the participants also recognized that AI and big data have the potential to provide even more personalized recommendations, especially if the recommendation model itself works well and is informed by a history of user actions, interests, and goals.

The participants also expressed that receiving action recommendations from multiple sources could expand the number of potential action recommendations received, may provide a user with more ideas, and may help a user more efficiently narrow-in on specific actions to take. The participants mentioned an interest in being able to cross-reference recommendations from multiple sources and pick whichever recommendations are best for them in the current situation (context). It was also mentioned that the participants already cross-reference advice from different sources in their day-to-day lives - for example, by reading something online then later discussing or confirming it with a close friend.

Overall, the study revealed that providing LLM-based context-aware action recommendations to users is a promising approach to helping users achieve their high-level goals. LLM-based action recommendation systems according to the present disclosure can at least partially assist with this validation such as by, for example, proactively citing or linking to different sources when displaying action recommendations. The LLM-based generation and AI delivery of contextualized action recommendations for high-level goals may also be improved by taking into account more context cues, including for example, the attributes, habits, and/or goal progress of the user. To this end, contextualized action recommendations that correlate with actions a user is already performing may best serve as simple nudging.

AI action recommendation systems that are more aware of the existing habits and goal progress of a user may be able to use that information to generate more personally tailored recommendations that consider the existing habits and interests of the user. For example, an LLM-based AI action recommendation system can deliver recommendations that build incrementally on top of the already existing habits of the user. This technique may be useful to encourage a user to gradually increase their rate of progress toward achieving their goal. For example, if a user already has a habit of running for 30 minutes per day, a system that is already aware of this habit could recommend that the user should instead run for 35 minutes, or should run at a slightly faster pace.

Tailoring the action recommendations to multiple goals at the same time may be another way to potentially produce action recommendations that are more tailored to the existing interests of a user. New habits may be formed or existing habits can be tweaked more easily if paired with an action that a user already derives pleasure from performing. Thus, in addition to utilizing obtained information about the environment the user is presently experiencing and the tools available within the environment for advancing the user's high-level goals, there are opportunities for AI action recommendation systems to utilize other information indicative of the interests or habits of the user to generate and deliver action recommendations that the user is more likely to adopt and find value or enjoyment in performing. For example, the user could be asked to explicitly input all of their high-level goals and their corresponding rankings of importance, or input a list of interests as hashtags (e.g., #music, #podcasts, #basketball) as part of an `onboarding' stage, similar to how music-streaming services may ask new users to list some of their favorite artists and genres before delivering recommendations. An AI action recommendation system could also implicitly observe the actions, habits, or interactions of a user with the AI recommendation system (e.g., a history of accepting or rejecting recommendations) to infer the existing habits or interests of the user.

It is also understood from the study that a context-aware AI action recommendation system should consider the expected effort, friction, and benefit of recommended actions. For example, it may be beneficial to distinguish between system-initiated action recommendations that are triggered automatically and solely by the AI action recommendation system given certain context inputs, and user-initiated recommendations that are triggered when the user prompts the AI action recommendation system to deliver action recommendations. An AI action recommendation system may determine the most opportune moments to present action recommendations to a user, such that performance of the recommend actions results in meaningful goal progress while also ensuring that user is not overburdened with recommendations during less meaningful or less opportune moments. To this end, an AI action recommendation system can generate recommendations that include scores or rankings. The scores or ranking may include a usefulness score that indicates how useful the action recommendation would be to achieving the user's high-level goal(s) at that particular moment, and a friction score indicating how easy or difficult it would be for the user to perform the recommended action given the context of their current environment and activity. The recommendation system could then combine these scores and only deliver recommendations to the user if and when their combined scores exceed a certain threshold value.

Some or all of the information learned from the study can be used to help inform the design of a real-world system implementing an LLM-based virtual assistant directed to helping users achieve high-level goals in a way that is beneficial and engaging to the users. The study also revealed that overall, the value of AI-provided contextualized action recommendations is an effective approach to supporting users in performing actions that advance their high-level goals. For example, the study revealed that users find value in the passive and visually-situated delivery of such recommendations, as well as the contextually-grounded nature of their content. Both of these factors together help users discover action ideas that are outside of their typical modes of goal accomplishment. The study further revealed that while action discovery is a potential strength of LLM-generated contextualized action recommendations, a further opportunity exists in action validation, which is commonly addressed by users through other sources, such as real domain experts or close social ties of a user (e.g., family members, friends). Thus, there are also opportunities for LLM-based action recommendation systems to assist with such validation. Additionally, it was determined that the generation and delivery of action recommendations can be improved by taking into account additional context cues, including the attributes, habits, and goal progress of the users, as well as by considering factors about the recommended actions themselves, such as expected levels of benefit for and effort from the user, given the context and attributes of the user.

### 2. Illustrative AI Action Recommendation System

Information gained from the above-described study and the related interviews with the study participants can be used to design and build an AI action recommendation system that employs one or more LLMs to generate recommended actions that can be requested and delivered via a virtual assistant to help users achieve high-level goals. In some examples, one or more existing LLMs such as GPT-4, ChatGPT, the LLaMA series (e.g., LLaMA, CodeLLaMA, LLaMA2, LLaMa3, etc.), OPT, or PaLM may be leveraged as part of an AI action recommendation system. Other examples may include the use of a multimodal LLM such as CM3leon or AnyMal from Meta. There is no requirement to start with any particular one of these existing LLMs, or any particular LLM. Each one of these existing LLMs are pre-trained with large amounts of text to generate and predict human-like dialogue based on a prompt or a series of prompts provided to the LLM. Many of such LLMs are task-agnostic, and have been able to perform well on activities such as summarizing text, generating code, programming robots, and performing health consultations. While these tasks involve helping a user accomplish a low-level goal (i.e., a short-term goal or immediate task), the inventors are unaware of any use of such LLMs for recommending actions relative to longer-term, high-level goals, as high-level goals typically involve a number of sub-goals and the performance of corresponding actions. In other examples, custom LLMs may be built upon existing pre-trained LLMs.

In any case, an LLM employed by an AI action recommendation system according to the present disclosure can tap into the vast knowledge contained within the data (e.g., text corpora) on which the LLM was trained. This can provide the LLM with the ability to recognize and understand information and patterns in received prompts or other input information, and to use this knowledge and ability to generate sensible and often creative outputs to prompt inputs. Such LLMs can potentially produce and deliver to the user action recommendations for their high-level goals that are grounded in the user context, the capabilities of the user relative to the user context, and the knowledge contained in the data used to train or fine-tune the LLM.

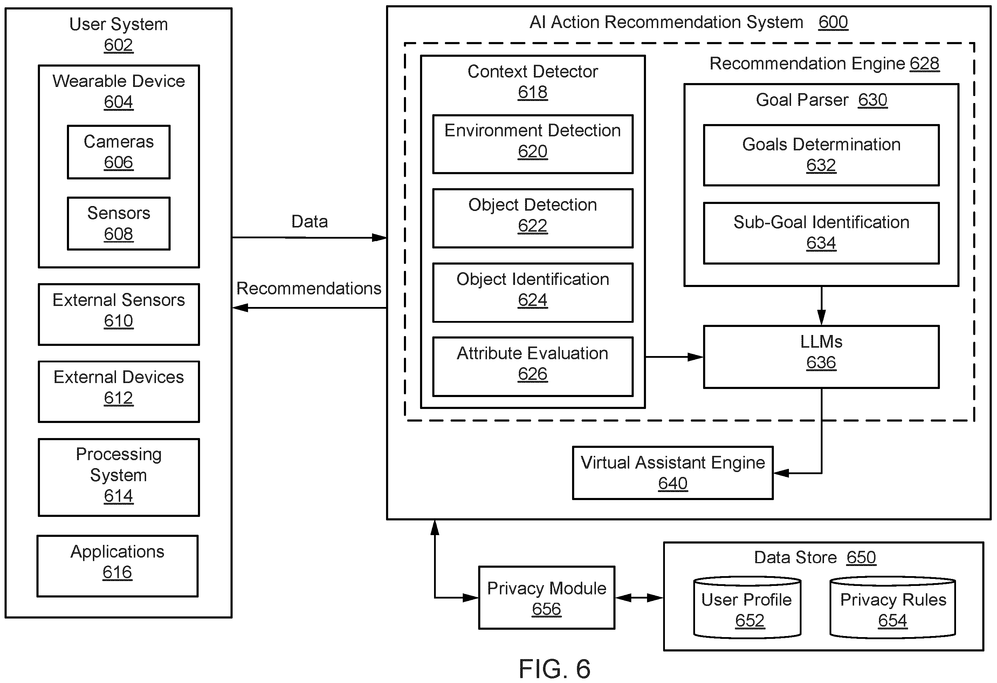

FIG. 6 is a block diagram of one example of an AI action recommendation system 600 architecture according to the present disclosure. The AI action recommendation system 600 is shown to be communicatively coupled over a network with a user system 602 such as for example, the client system 105 of FIG. 1 or another electronic device including hardware, software, or embedded logic components or a combination of two or more such components. In some examples, the user system 602 may be an extended reality system and can include, for example, a wearable device 604 such as the eyewear device 305 of FIG. 3A or the head-mounted device 350 of FIG. 3B, a smartwatch, smart clothing, etc. In any case, the wearable device 604 can include one or more cameras 606 and other sensors 608 such as microphones, motion sensors or any of the sensors previously described herein. When the user system 602 is an extended reality system, the user system 602 may also be associated with external sensors 610, which again may be any type of sensor described herein. When the user system 602 is an extended reality system, the user system 602 can also include external devices 612, such as for example, the neckband 330 of FIG. 3A, or the sensor-containing wristband 410 of FIG. 4A, which may be operative to report user movement or actions, among other things. The user system 602 can further include a processing system 614 that may execute one or more applications 616. The one or more applications can include a virtual assistant application. A virtual assistant application may, as described above relative to the virtual assistant application 130 of FIG. 1, instantiate at least a portion of a virtual assistant that can be used by a user of the user system 602 to communicate with the AI action recommendation system 600 and to receive action recommendations therefrom.

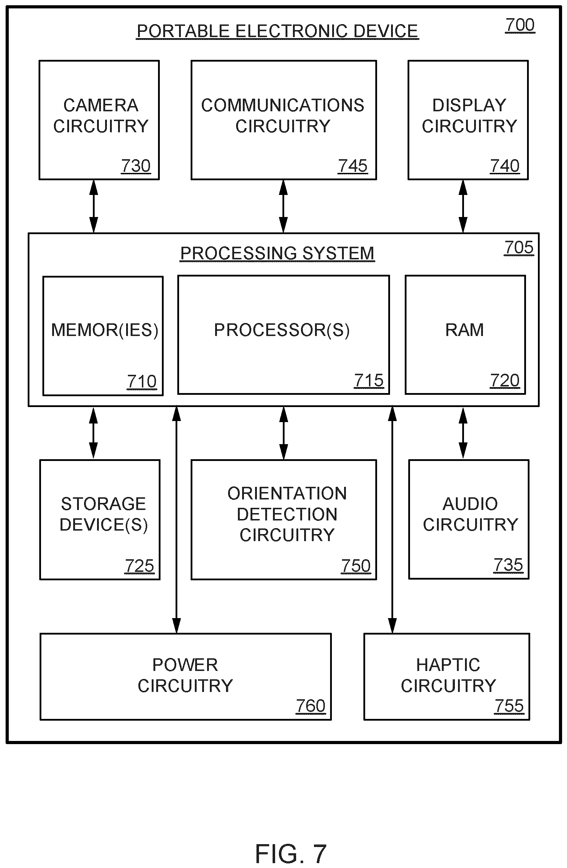

In other examples, the user system 602 may be an electronic device that is not a wearable device and does not provide a user with an extended reality environment. For example, the user system 602 may be a portable electronic device such as the portable electronic device 700 example whose architecture is represented in FIG. 7. In some examples, the portable electronic device 700 may be implemented as communication device (e.g., a smart, cellular, mobile, wireless, portable, and/or radio telephone), home management device (e.g., a home automation controller, smart home controlling device, and smart appliances), a vehicular device (e.g., autonomous vehicle), and/or computing device (e.g., a tablet, phablet, notebook, and laptop computer; and a personal digital assistant). The foregoing implementations are not intended to be limiting and the portable electronic device 700 may be implemented as any kind of electronic or computing device that is configured to provide at least user context data to the AI action recommendation system 600 and to receive at least contextualized (i.e., context-aware/context-relevant) action recommendations from the AI action recommendation system 600.

The portable electronic device 700 can include a processing system 705, which may include one or more memories 710, one or more processors 715, and RAM 720. The one or more processors 715 can read one or more programs from the one or more memories 710 and execute the one or more programs using the RAM 720. The one or more processors 715 may be of any type including but not limited to a microprocessor, a microcontroller, a graphical processing unit, a digital signal processor, an ASIC, a FPGA, or any combination thereof. In some embodiments, the one or more processors 715 may include a plurality of cores, one or more coprocessors, and/or one or more layers of local cache memory. The one or more processors 715 can execute the one or more programs stored in the one or more memories 710 to perform operations as described herein including those described with respect to FIG. 1-4C.

The one or more memories 710 can be non-volatile and may include any type of memory device that retains stored information when powered off. Non-limiting examples of memory include electrically erasable and programmable read-only memory (EEPROM), flash memory, or any other type of non-volatile memory. At least one memory of the one or more memories 710 can include one or more non-transitory computer-readable media from which the one or more processors 715 can read instructions. A computer-readable storage medium can include electronic, optical, magnetic, or other storage devices capable of providing the one or more processors 715 with computer-readable instructions or other program code. Non-limiting examples of a computer-readable storage medium include magnetic disks, memory chips, read-only (ROM), RAM, an ASIC, a configured processor, optical storage, or any other medium from which a computer processor can read the instructions.

The portable electronic 700 can also include one or more storage devices 725 configured to store data received by and/or generated by the portable electronic device 700. The one or more storage devices 725 may be removable storage devices, non-removable storage devices, or a combination thereof. Examples of removable storage and non-removable storage devices include magnetic disk devices such as flexible disk drives and HDDs, optical disk drives such as compact disk (CD) drives or digital versatile disk (DVD) drives, SSDs, and tape drives.

The portable electronic device 700 may also include other components that provide additional functionality. For example, camera circuitry 730 may be configured to capture images and/or video of a surrounding environment of the portable electronic device 700. Examples of camera circuitry 730 include digital or electronic cameras, light field cameras, three-dimensional (3D) cameras, image sensors, imaging arrays, and the like. Similarly, audio circuitry 735 may be configured to record sounds from a surrounding environment of the portable electronic device 700 and output sounds to a user of the portable electronic device 700 or capture sound data for transmission to the AI action recommendation system 600. Examples of audio circuitry 735 can include microphones, speakers, and other audio/sound transducers for receiving and outputting audio signals and other sounds. Display circuitry 740 may also be present and may be configured to display images, video, and other content to a user of the portable electronic device 700 or to receive input from the user of the portable electronic device 700. Examples of the display circuitry 740 may include a liquid crystal display (LCD), a light-emitting diode (LED) display, and a touchscreen display. Communications circuitry 745 may be configured to enable the portable electronic device 700 to communicate with various wired or wireless networks and other systems and devices. Examples of communications circuitry 745 include wireless communication modules and chips, wired communication modules and chips, chips for communicating over local area networks, wide area networks, cellular networks, satellite networks, fiber optic networks, and the like, systems on chips, and other circuitry that enables the portable electronic device 700 to send and receive data. Orientation detection circuitry 750 may be configured to determine an orientation and a posture for the portable electronic device 700 and/or a user of the portable electronic device 700. Examples of orientation detection circuitry 750 may include ultra-wideband (UWB) positioning devices, accelerometers, gyroscopes, motion sensors, tilt sensors, inclinometers, angular velocity sensors, gravity sensors, and inertial measurement units. Examples of orientation detection circuitry 750 may include global positioning system (GPS) receivers, in which case the orientation detection circuitry 750 can also geolocate the portable electronic device 700 and/or a user of the portable electronic device 700. Haptic circuitry 755 may be configured to provide haptic feedback to and receive haptic feedback from a user of the portable electronic device 700. Examples of haptic circuity 755 include vibrators, actuators, haptic feedback devices, and other devices that generate vibrations and provide other haptic feedback to a user of the portable electronic device 700. Power circuitry 760 may be configured to provide power to the portable electronic device 700. Examples of power circuitry 760 include batteries, power supplies, charging circuits, solar panels, and other devices configured to receive power from a source external to the portable electronic device 700 and power the portable electronic device 700 with the received power.

The portable electronic device 700 may also include other input and output (I/O) components. Examples of such input components can include a mouse, a keyboard, a trackball, a touch pad, a touchscreen display, a stylus, data gloves, and the like. Examples of such output components can include displays such as but not limited to holographic displays, 3D displays, projectors, and the like.

Referring again to FIG. 6, the AI action recommendation system 600 is shown to further include a number of components and modules, any or all of which may be incorporated in software, hardware, or a combination thereof. For example, the AI action recommendation system 600 is shown to include a recommendation engine 628 for causing the generation of a contextualized action recommendation. The recommendation engine 628 may include a context detector component 618. The context detector component 618 can receive user context data (e.g., image data, location data) from the user system 602. The context detector component 618 can include an environment detection module 620. The environment detection module 620 may be configured to analyze user context data received by the context detector component 618 to determine the current situational context (e.g., surroundings) of the user. For example, the environment detection module 620 may determine from the received user context data whether the user is indoors or outdoors, whether other people are present and various other aspects of the user's current surroundings. In some examples, the environment detection module 620 can also help to determine various other contextual characteristics such as, for example, the geographic location of the user, the location type (e.g., in a gym, in a restaurant, in a grocery store, etc.), the current activity of the user (e.g., exercising, eating, driving, etc.). In some examples, the environment detection module 620 may cooperate with other sources of user context to make environment determinations, such as with a GPS transceiver to determine a user location or with a light sensor or with an online weather service to determine weather conditions. In other words, an environment determination by the environment detection module 620 may be based on one element of the context data or on a combination of many elements of the context data (e.g., a captured image and detected user motion which collectively indicates that the user is exercising inside a gym). The environment detection module 620 may inform the recommendation engine 628 of the AI action recommendation system 600 as to the current environment and activity of a user of the user system 602.

The context detector component 618 can further include an object detection module 622 for detecting, based on data received from the user system 602, physical objects in the current real-world environment of the user that are potentially useable to further one or more high-level goals of the user. The context detector component 618 can also include an object identification module 624 for identifying real-world physical objects detected by the object detection module 622. The object detection module 622 and the object identification module 624 may operate according to any object detection and identification techniques described herein or otherwise known in the art, including by utilizing AI models trained in image recognition, sound identification, etc.

The context detector component 618 can additionally include an object attribute evaluation module 626 that can evaluate the attributes possessed by the identified physical objects to determine how a given physical object can be used relative to helping a user achieve a particular high-level goal. In some cases, it may be determined by the object attribute evaluation module 626 that the attributes of a given physical object do not lend themselves for use in achieving any of a user's high-level goals. In other cases, it may be determined by the object attribute evaluation module 626 that the attributes of a given physical object render the physical object usable in achieving more than one of a user's high-level goals, whether in like or different ways.

As illustrated in FIG. 6, the recommendation engine 628 may also include a goal parser component 630 that can be configured to determine, or help determine, the meaning of a high-level goal of a user, and to divide the high-level goal into a plurality of sub-goals. The goal parser component 630 may include a goals determination module 632 that can determine/identify one or more high-level goals of a user. The goals determination module 632 may receive user input in this regard. For example, when a user first engages the AI action recommendation system 600, or later through a user initiated or system-prompted process, the user may identify one or more high-level goals for which the user would like action recommendation assistance.

The one or more high-level goals of the user may be input or otherwise provided to the goals determination module 632. The goals determination module 632 may be communicatively coupled to the one or more LLMs 636 such that the goals determination module 632 can work in conjunction with the one or more LLMs 636 to interpret, or help to interpret, high-level goals that are input by the user as free-form natural language text or utterances. In some examples, the recommendation engine 628 may present a user with a pre-set list of high-level goals for selection, either in lieu of or in addition to permitting free-form natural language high-level goal input. In some cases, the recommendation engine 628 may also present one or more proposed high-level goals to the user based on user information, such as for example, user profile information, historical user activity, historical user input, etc. The one or more proposed high-level goals may also be presented to the user in lieu of or in addition to permitting free-form natural language high-level goal input. Any high-level goals presented to the user in this manner may be goals that are predicted by the one or more LLMs 636 or another model of the AI action recommendation system 600 to be of interest to the user. In some examples, the goals determination module 632 can cause the high-level goals input by and/or selected by the user to be stored for further use by the recommendation engine 628.

The goal parser 630 can also include a sub-goal identification module 634. As previously explained, high-level goals differ from low-level goals in that high-level goals typically comprise a number of sub-goals, each of which needs to be achieved in order for the user to achieve the high-level goal of which the sub-goals are a part. Thus, there is added complexity to the AI action recommendation system 600 because generating action recommendations for a high-level goal commonly requires also generating one or more action recommendations for each sub-goal of the high-level goal. Before such sub-goal action recommendation can be generated, the sub-goals of a given high-level goal must be identified. The sub-goal identification module 634 can be configured for this purpose. Particularly, the sub-goal identification module 634 may be communicatively coupled to the one or more LLMs 636 and/or to one or more other models of the AI action recommendation system 600, to identify the sub-goals of a given high-level goal. Identification of sub-goals by the sub-goal identification module 634 may be based, for example, on the vast amount of information contained in the data on which the one or more LLMs 636 was trained, on historical actions of the user (or other users) when previously seeking to achieve the same associated high-level goal or a similar high-level goal, on information from other sources (e.g., an Internet search, an online database, treatise, guide, etc.), or on any combination of such information. For example, if a high-level goal of a user is to "eat healthier," the sub-goal identification module 634 may utilize past historical eating or cooking activities of the user to identify the types of foods the user prefers, to extract a number of healthy foods from the overall collection of foods, and to identify therefrom sub-goals that might include reviewing recipes, purchasing ingredients, and learning new food preparation or cooking techniques.

The recommendation engine 628 may further include or be associated with the one or more LLMs 636. The one or more LLMs can receive as input, data from both the context detector 618 and the goal parser 630 of the recommendation engine 628, as well as from individual modules of either or both of the context detector 618 and the goal parser 630.

The AI action recommendation system 600 may further include a virtual assistant engine 640, which may be or may be similar to the virtual assistant engine 110 of FIG. 1. The virtual assistant engine 640 receives contextualized action recommendations from the one or more LLMs 636. The contextualized action recommendations may be natural language contextualized action recommendations. The virtual assistant engine 640 can cooperate with a virtual assistant application that is executed on the user system 602 to implement a virtual assistant via which the natural language contextualized action recommendations can be presented to the user. As an example, and referring back to the previously described high-level user goal of "eating healthier," the AI action recommendation system 600 may cause the virtual assistant to recommend, upon detecting the user's current location as in or near a grocery store, that the user buy one or more ingredients required for a "healthy" recipe that was previously presented to and selected by the user and deemed to be missing from the user's kitchen (e.g., through user input, system communication with one or more smart appliances, other sensors, other systems, etc.).

From the above description, it can be understood that the virtual assistant engine may utilize AI systems to analyze received input data and provide action recommendations to a user to facilitate user accomplishment of high-level goals, and that the AI systems may include one or more LLMs for this purpose. The one or more LLMs may generate recommendations based on user input; detected user context such as real-time images of a user's environment; location information; audio information such as a natural language utterance of the user or background conversations or other sounds detected by a microphone; user motion; any other contextual clues ascertainable by a device of the client system, and combinations thereof. The recommendations may also be based on information that is accessible by virtual assistant engine from any variety of online sources. In some examples, an online source may include information about the user, such as a user's Facebook^{®} profile or another social networking or other network accessible profile of the user.

In some examples, the AI action recommendation system 600 may also be communicatively coupled to a data store 650. The data store 650 may include a plurality of databases for storing data useable by components of the AI action recommendation system 600 relative to generating contextualized action recommendations for presentation to a user. For example, and without limitation, the data store 650 may include a user profile database 652 that may store any of various personal information of a user of the user system 602. The personal information may be provided by the user, extracted from one or more online profiles, such as but not limited to, one or more social media profiles, or a combination thereof. Personal information may also be obtained from other sources, including historical interactions of the user with the AI action recommendation system 600. The AI action recommendation system 600 may use data stored in the user profile database 652 in the process of generating contextualized action recommendations for the user. For example, the personal information stored in the user profile database 652 may indicate that the user dislikes using particular objects, dislikes or prefers certain exercises or foods, etc. Such information may be used by the one or more LLMs 636 of the AI action recommendation system 600 to customize action recommendations to user preferences.

In some examples, the data store 650 may also include a privacy rules database 654. The privacy rules database 654 may contain various rules, instructions, or guidelines that govern how the personal user information in the user profile database 652 can be used by the AI action recommendation system 600. For example, the privacy rules database 654 may instruct the AI action recommendation system 600 as to what personal information obtained from the user profile database 652 (or elsewhere) can be shared with the one or more LLMs 636. To further protect user privacy, some examples may include a privacy module 656 that is communicatively coupled between the AI action recommendation system 600 and the user profile database 652 (or the data Store 650 in general. The privacy module 656 can create a wall between the AI action recommendation system 600 and the user profile database 652 to help ensure that only personal user information that is permitted to be shared, is shared with the AI action recommendation system 600. For example, the privacy module 656 can be an AI module that is trained separately from the one or more LLMs 636 or other models of the AI action recommendation system 600. In this manner, the privacy module 656 can interpret requests from the AI action recommendation system 600 for personal user information stored in the user profile database 652, and can determine according to its training and rules established during its training, whether the requested information can be provided to the AI action recommendation system 600. For example, the privacy rules in the privacy rules database 654 may be dependent on various factors, such as user location or other user context, the nature of the action recommendation for which the personal information is being requested, etc. The privacy module 656 can compare user information received from the AI action recommendation system 600 with such factors associated with the rules in the privacy rules database 654 when making a determination as to whether requested personal user information can be provided to the AI action recommendation system 600.

Some examples of the AI action recommendation system 600 may be passive, meaning the AI action recommendation system 600 will only use the virtual assistant to provide an action recommendation to a user when the user is actively engaged with the virtual assistant and the action recommendation is prompted (in some manner) by the user. Contrarily, some examples of the AI action recommendation system 600 may be proactive and persistent. This means that the AI action recommendation system 600 may at least periodically monitor user context, transmit associated data to the AI action recommendation system 600, store the associated data, use the virtual assistant to proactively push an action recommendation to a user, and/or perform other actions, even when the user is not engaged with the virtual assistant. This can allow the AI action recommendation system 600 to not only gather additional valuable information that can be used to better tailor action recommendations to the user, but also to provide the user with contextualized action recommendations at times that are optimal for user performance of the recommended actions. In some examples, the persistence functionality of the AI action recommendation system 600 may need to be expressly enabled by the user, and may be similarly paused or terminated by the user. In some examples, the user may have the option of limiting or otherwise specifying AI action recommendation system 600 operations that may be performed with respect to the user when the user is not engaged with the virtual assistant. In some examples, the AI action recommendation system 600 may be required, through the virtual assistant or otherwise, to inform or remind the user that the AI action recommendation system 600 and the virtual assistant is operating in a persistent mode. In some examples, the type of information that can be gathered and stored by the AI action recommendation system 600 while operating in a persistent mode may be defined or restricted by rules or other guidelines, such as but not limited to the privacy rules in the privacy rules database 654 of FIG. 6.

Examples of the AI action recommendation system 600 and an associated virtual assistant may also include reminder, timer, alarm, or other similar functionality. Some virtual assistant examples may also have scheduling functionality, in which case, a virtual assistant may also have access to a user's calendar. In this manner, the virtual assistant may be usable to schedule meetings, remind users of meetings, book travel, etc. When the AI action recommendation system 600 is also a persistent AI action recommendation system 600, the virtual assistant may be able to proactively recommend meeting times, or travel times and destinations, based on a user's calendar, user information such as learned or discoverable user interests, and/or searchable information such as airline schedules, airfare, or other information.

It is described above, and additionally below, that a virtual assistant can utilize the one or more LLMs 636 of the AI action recommendation system 600 to present a user with action recommendations, such as natural language action recommendations, or to otherwise engage a user in natural language conversation. It should be understood, however, that the virtual assistant may also have other functionality. For example, based on an action recommendation and a user's response or reaction to an action recommendation, the virtual assistant (or another component of the AI action recommendation system 600 at the instruction of the virtual assistant) may make API calls to other services in furtherance of the high-level goal to be advanced or achieved by user performance of the recommended action. As one example, if a user approves a recipe in furtherance of the high-level goal of eating healthier, and the virtual assistant is aware that the user does not have one or more ingredients required by the recipe, the virtual assistant may make an API call or take another action with the purpose of procuring the missing ingredients. In some examples, the virtual assistant may be required to request approval from the user before taking such actions, while in other examples, user permission may not be required. The operation of the virtual assistant in this capacity may be directed by various system settings that may be changed by the user.

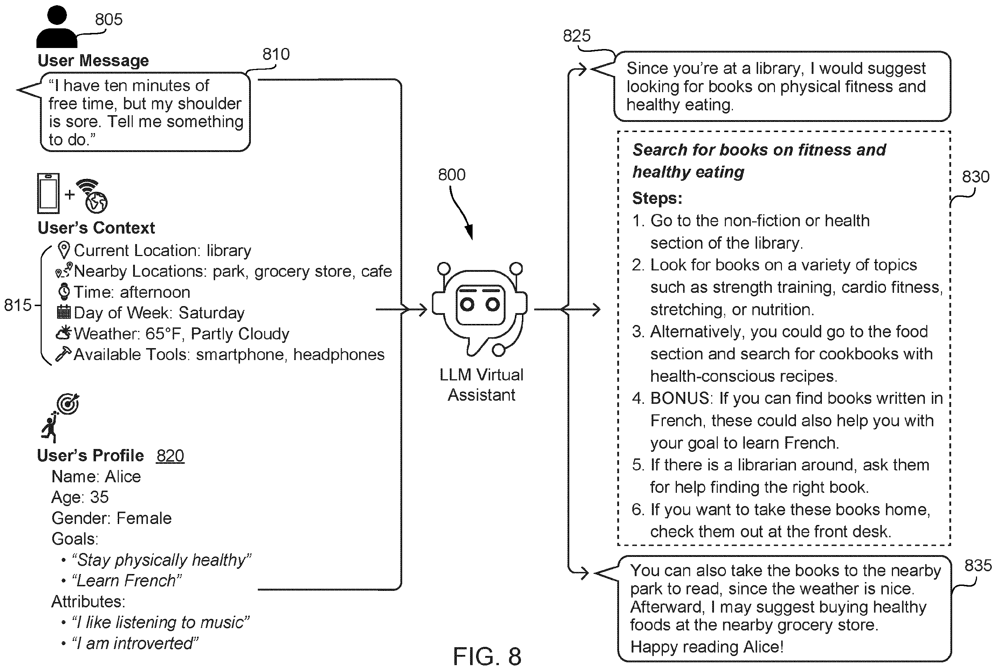

FIG. 8 is a system architecture flow diagram for an AI action recommendation system according to the present disclosure, such as the AI action recommendation system 600 of FIG. 6. As shown, an LLM-based virtual assistant 800 is configured to provide action recommendations to a user based on user input, where the action recommendations are intended to help the user advance or achieve at least one high-level goal. The LLM-based virtual assistant 800 may be implemented by cooperation of the virtual assistant engine 640 of the AI action recommendation system 600 and a virtual assistant application 616 that executes on the user system 602.

In this example, a user 805 of the user system 602 of FIG. 6 initiates a conversation with the LLM-based virtual assistant 800 by sending the LLM-based virtual assistant 800 a message 805 requesting that the LLM-based virtual assistant 800 "Tell me something to do." The message 805 also informs the LLM-based virtual assistant 800 that the user 805 has only 15 minutes of free time and that the user 805 has a sore shoulder, which is information that can influence an action recommendation provided to the user 805. Assuming that the LLM-based virtual assistant 800 is associated with a passive AI action recommendation system 600 for purposes of this example, the LLM-based virtual assistant 800 then determines the user context 815. In this example, the user context is determined from a collection of different information that includes the current location of the user 805; an identification of nearby places of interest, which includes a park, a grocery store, and a cafe; a general time of day (which could instead be a precise time of day); the day of the week; the weather conditions at the user's location; and tools available to the user 805 to perform a recommended action. In this example, the tools are identified as a smartphone and headphones. The user context information may be obtained by the LLM-based virtual assistant 800 in any manner described herein.

In the example of FIG. 8, the LLM-based virtual assistant 800 also accesses a user profile 820, which may be an online user profile, a stored user profile, or a combination thereof. Personal information about the user 805 may be obtained from the user profile 820. Access to the personal information may be controlled by privacy rules, such as the privacy rules of the privacy rules database 654 of FIG. 6. In this example, the LLM-based virtual assistant 800 determines from the personal information in the user profile, the name, age, and gender of the user 805, and also that two high-level goals of the user are staying physically healthy and learning French. The LLM-based virtual assistant 800 also determines from the personal information in the user profile that the user 805 likes listening to music and considers herself to be an introvert.

The user context 815 and the user's personal information 820 can serve as input to the LLM-based virtual assistant 800 when determining an action recommendation for presentation to the user 805. This is evident from the action recommendation 825 provided to the user 805 by the LLM-based virtual assistant 800, which indicates that the action recommendation of "looking for books on physical fitness and healthy eating" at the library is based, at least in part, on user context (user location) and user personal information (e.g., high-level goal of physical fitness). The action recommendation 825 may also have associated therewith, tips or instructions 830 to help the user find such books at the library. As noted in the instructions 830, finding a relevant book that is also written in French is predicted to help the user to also achieve the user's other stated goal of learning French. Therefore, it may be understood that the LLM-based virtual assistant 800 may actively seek to help the user 805 achieve as many goals as possible with each action recommendation.

The LLM-based virtual assistant 800 may also provide additional action recommendations based on the initial action recommendation 825 or may recommend an extension of the initial action recommendation 825. For example, as represented in FIG. 8, the virtual assistant 800 provides the further action recommendation 835 that the user take any discovered books to the nearby park to read, and that the user buy healthy foods at the nearby grocery store. These additional action recommendations 835 are also provided to the user 805 in consideration of the user context 815 (existence of nearby park and grocery store, and nice weather conditions) and in additional furtherance of the user's staying physically healthy and learning French high-level goals that, in this example, were obtained from the user profile 820.

### 3. Illustrative AI Action Recommendation System Implementation

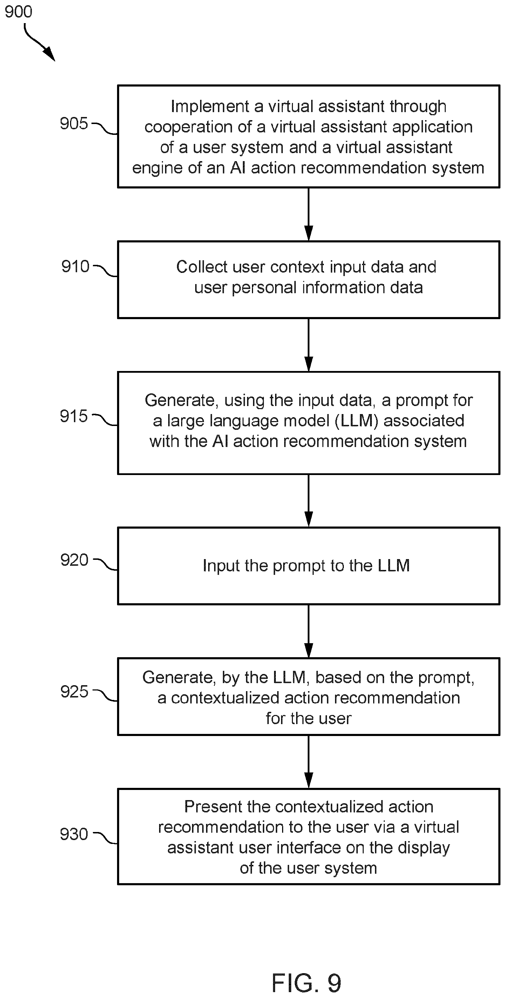

FIG. 9 is a flow diagram 900 representing one example of a computer-implemented method of implementing an LLM-based virtual assistant to provide users with contextualized action recommendations that are predicted to help the user achieve one or more high-level goals. The operations depicted in FIG. 9 may be implemented in software (e.g., code, instructions, program) executed by one or more processing units (e.g., processors, cores) of the respective systems, hardware, or combinations thereof. The software may be stored on a non-transitory storage medium (e.g., on a memory device). The method presented in FIG. 9 and described below is intended to be illustrative and non-limiting. Although FIG. 9 depicts the various processing steps occurring in a particular sequence or order, this is not intended to be limiting. In certain other embodiments, the steps may be performed in some different order, or some steps may also be performed in parallel.

At step 905 of FIG 9, it is represented that a virtual assistant can be implemented through a user system comprising a display that displays content to a user, one or more sensors that capture input data, and a virtual assistant application, in combination with an AI action recommendation system that is associated with a large language model and includes a virtual assistant engine that cooperates with the virtual assistant application of the user system to implement the virtual assistant. The user system may be, for example, a desktop computer, a notebook or laptop computer, a netbook, a tablet computer, an e-book reader, a global positioning system (GPS) device, a personal digital assistant, a smartphone, a wearable extended reality device, or some combination thereof. In some examples, the virtual assistant may be a passive virtual assistant, meaning that the virtual assistant only provides action recommendations to a user when the user is engaged with the virtual assistant and the virtual assistant receives an appropriate prompt from the user. In some examples, the virtual assistant may be a proactive and persistent virtual assistant, meaning that the virtual assistant can proactively provide action recommendations to a user even when the user is not engaged with the virtual assistant, and that the virtual assistant can run in the background to collect at least some user context data at times when the user is not engaged with the virtual assistant.

At step 910, input data can be collected for use in generating a contextualized action recommendation. The input data can comprise personal information data of the user, which includes at least one high-level goal of the user. The personal information data of the user can be collected from various sources, including as input from the user, from a network accessible social media user profile, from a user profile stored in a datastore communicatively coupled to the AI action recommendation system, or from a user profile stored on the user system. The input data also includes user context data, which may be collected from the one or more sensors of the user system. The one or more sensors may be, for example, a motion sensor such as a gyroscope or an accelerometer, an image capturing device such as a camera, an input and/or output audio transducer such as a microphone or a speaker, a GPS transceiver that can be used to identify a geographic location of the user system and/or the user, and various combinations thereof. As an example, a camera of the user system may capture images of the environment in which the user is present, and the images may include various objects within the environment that can be detected and identified by the AI action recommendation system as being usable by a user to perform a recommended action.

At step 915, the input data can be used to generate a prompt for the large language model. The prompt may be, for example, a textual input to the virtual assistant application, or a natural language utterance of the user. The prompt may be a basic request by the user to recommend an action to be performed by the user, or the prompt may be a more complex communication from which an action recommendation request is interpreted and extracted.

At step 920, the generated prompt is input to the large language model to initiate generation of an action recommendation, and at step 925, the large language model generates a contextualized action recommendation for the user based on the prompt, wherein the contextualized action recommendation is predicted to help the user achieve the at least one high-level goal. In some examples, performance of a single contextualized action recommendation may help the user to simultaneously advance or achieve more than one high-level goal.

At step 930, the contextualized action recommendation can be presented to the user via a virtual assistant user interface on the display of the user system. The contextualized action recommendation may be presented to the user as a natural language contextualized action recommendation. To that end or otherwise, the virtual assistant user interface may be a chat interface. The particular style of the virtual assistant user interface may be different in other examples. The contextualized action recommendation may be directed to the performance of one or more sub-goals that together makeup an overall high-level goal. The contextualized action recommendation may be presented along with other information, such as for example, instructions or other guidance regarding how to perform the recommended action, an identification of the high-level goal(s) to which the action recommendation is applicable, one or more bases (e.g., user context or user information bases) for the contextualized action recommendation, etc.

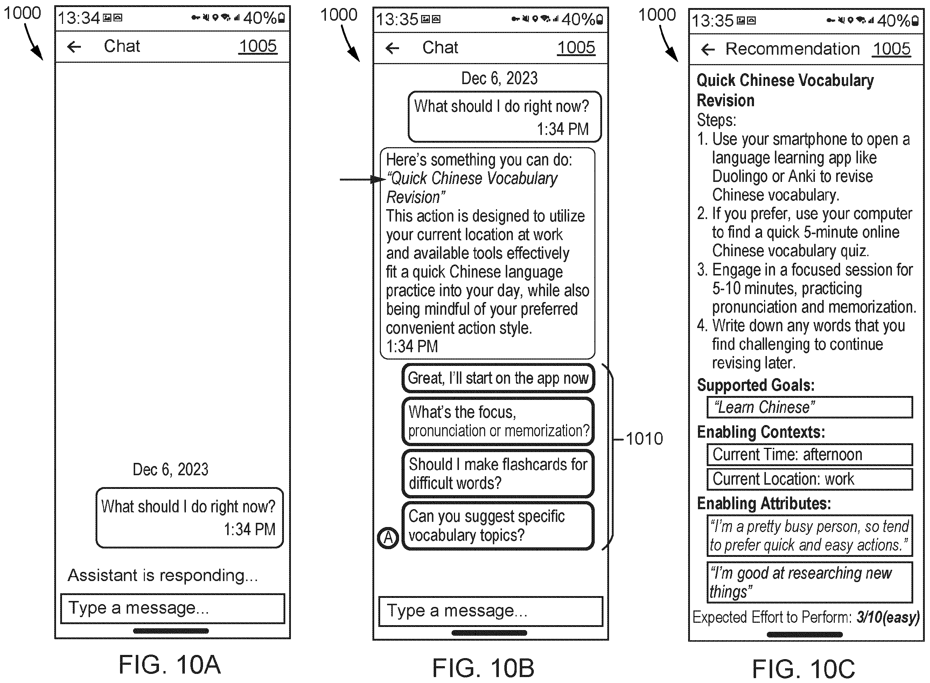

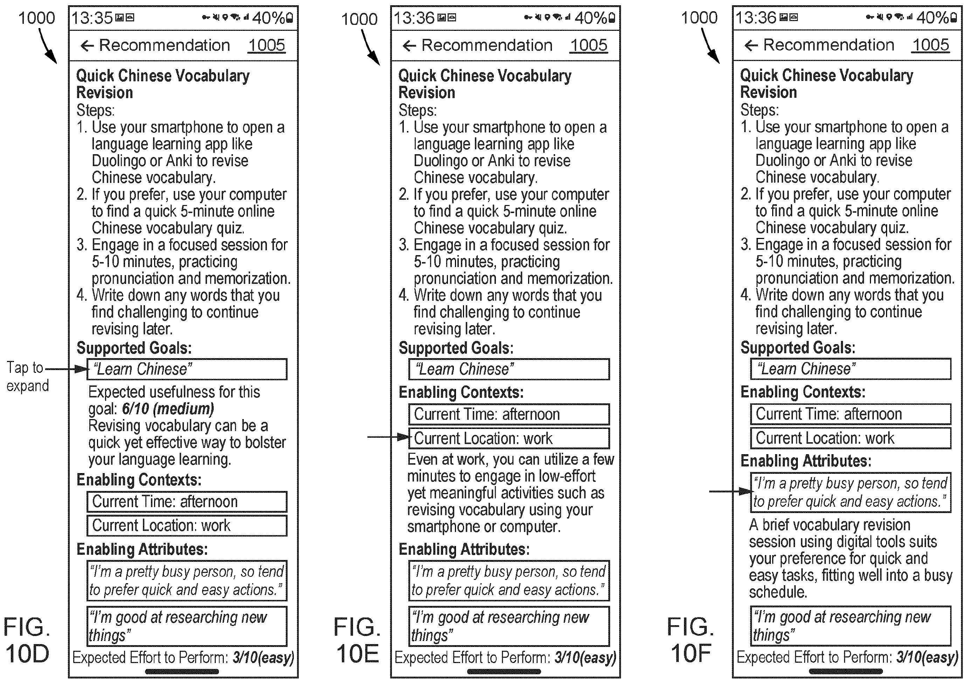

FIGS. 10A-10F present one real-world example of presenting contextualized action recommendations to a user via a virtual assistant. The example illustrated by FIGS. 10A-10F may be implemented using an AI action recommendation system such as the AI action recommendation system 600 of FIG. 6, in cooperation with a user system, such as the user system 602 of FIG. 6. The user system may be specifically embodied in a portable electronic device, such as the portable electronic device 700 of FIG. 7. Even more specifically, the portable electronic device used in the example application depicted in FIGS. 10A-10F is a smartphone 1000, which may have any or all of the features described above with respect to the client system 105, the user system 602 and the portable electronic device 700. For example, the smartphone 1000 may include a processor; one or more memories; an operating system; one or more applications, including a virtual assistant application, that are stored in the one or more memories and are executable by the processor; a display 1005; one or more cameras for capturing still images and/or video; a gyroscope and/or other phone orientation indicating components; a GPS transceiver that is usable to geolocate the smartphone and/or the user of the smartphone; one or more haptic feedback devices to convey sensory feedback to the user; and a battery or another suitable power source. The smartphone 1000 is used to communicate with the AI action recommendation system 600 over a network, such as but not limited to the Internet.

The example scenario presented in FIGS. 10A-10F involves a user engaging with a virtual assistant of the AI action recommendation system 600 to request a recommendation of an activity to perform. In this example, the virtual assistant acts as a passive virtual assistant, meaning that the virtual assistant responds to queries or other inputs from the user rather than proactively presenting the user with action recommendations. In this example, the AI action recommendation system 600 is already familiar with the user (e.g., the user is registered with the system) and is aware of one or more high-level goals of the user, such as by any of the mechanisms described above. In this example, the virtual assistant employs a chat interface for communicating with the user.

As indicated in FIG. 10A, the user initially inputs to the virtual assistant, the natural language query "What should I do right now?" The query may be a textual input through a keyboard of the smartphone 1000 or a natural language utterance of the user that is input via a microphone of the smartphone 1000. As indicated in FIG. 10B, the virtual assistant, by utilizing one or more LLMs associated with the AI action recommendation system 600, provides a natural language response to the user query by recommending that the user complete a "Quick Chinese Vocabulary Revision." This action recommendation by the virtual assistant is made in consideration of a number of factors. For example, the action recommendation is based on the AI action recommendation system 600 being aware that learning to speak Chinese or something similar thereto is a high-level goal of the user. Additionally, it can be understood from the dialogue provided by the virtual assistant in FIG. 10B, that the virtual assistant made the recommendation in the context of the user currently being at work, the tools that are currently available to the user to complete the recommended action, and the user's action type preference.

The AI action recommendation system 600 may know that the user is currently at work based on, for example, location data obtained from the GPS transceiver of the smartphone 1000. The AI action recommendation system 600 may know what tools the user currently has to work with based on, for example, a stored knowledge of the objects in the user's office, an image of the user's current surroundings that is captured by a camera of the smartphone 1000, or knowledge that the user can use the smartphone 1000 itself to compete the recommended action. The AI action recommendation system 600 may know what action style the user prefers based on, for example, user preference information from an online user profile, user preference information stored in a user profile database that is accessible by the AI action recommendation system 600 (e.g., user profile database 652), or based on historic user preferences of which the AI action recommendation system 600 is aware.

In this example, a number of other items appear on the chat interface of the smartphone display 1005. Particularly, it can be seen that a number of selectable quick actions 1010 appear below the recommended action dialogue presented by the virtual assistant. In this example, the quick actions can facilitate moving to the next step of the recommended action or can facilitate requests for additional information (e.g., questions about sub-actions). As shown, the quick actions 1010 may be presented to resemble additional content. The quick actions 1010 may also perform a function polling role, wherein selecting a quick action 1010 that results in completion of an action or moves the user toward a next step of an action is automatically logged for purposes of tracking user goal achievement progress.

FIG. 10C illustrates another screen that may be presented by the virtual assistant on the smartphone display 1005 in association with the recommended action of performing a quick Chinese Vocabulary revision. As depicted, the user may be provided with additional details or instructions (e.g., steps) about how to perform the recommended action. The user may also be presented with "Supported Goals" information, which indicates what high-level goal of the user is advanced by the recommended action, as well as "Enabling Context" information, which indicates what factors influenced the action recommendation. For example, the Supported Goals information indicates that the supported high-level goal of the user is to "learn Chinese," and the Enabling Context information reveals that the context which enabled or influenced the action recommendation includes the time of the user's request and the user's location. Other information, such as "Enabling Attributes" may also be provided, and in this case reveals that the user's preference for easy actions and knowledge that the user is good at researching new things influenced the recommended action. An expected measure of the effort to perform the recommended action is also presented in this example, and the expected effort comports with the user's preference for easy actions.

Referring now to FIGS. 10D-10F, it may be observed that in this example, each of the Supported Goals, Enabling Contexts, and Enabling Attributes content may be expanded by tapping on the same. Expanding the Supported Goals content, for example, may provide additional related information such as an expected usefulness score and a further explanation of how the recommended action can help the user achieve the high-level goal of learning Chinese. Similarly, Expanding the Enabling Contexts content, may provide for example, additional related information such as an explanation of why the recommended action is a good choice for performing while the user is at work. Also similarly, expanding the Enabling Attributes content, may provide for example, additional related information such as an explanation of why the recommended action comports with the user's preference for quick and easy actions.

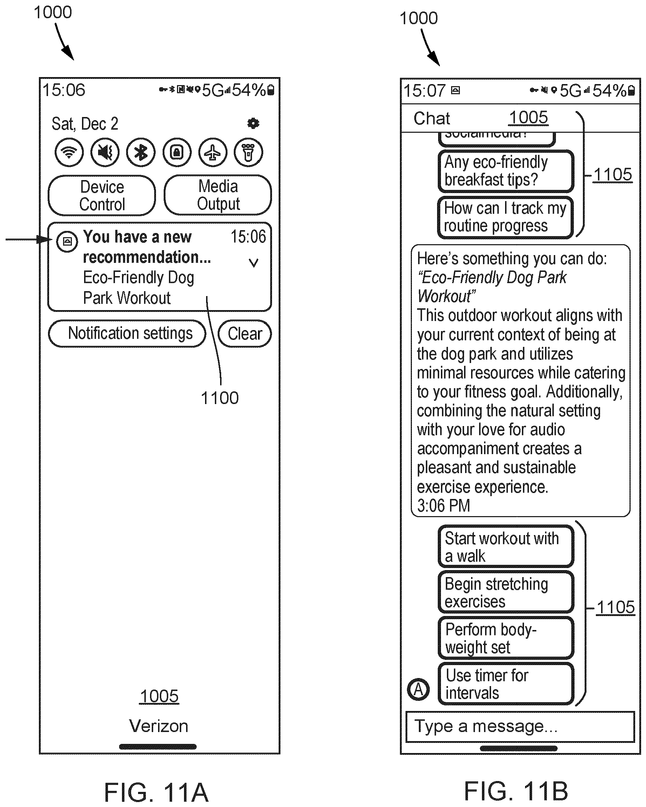

FIGS. 11A-11B illustrate another real-world example of presenting contextualized action recommendations to a user via a virtual assistant. The example illustrated by FIGS. 11A-11B may again be implemented using the AI action recommendation system 600 of FIG. 6 with a user system implemented as the smartphone 1000 of FIGS 10A-10F. Therefore, the smartphone 1000 may have any of the functionality previously described herein.

In contrast to the virtual assistant of the example presented through FIGS. 10A-10F, the virtual assistant of this example is proactive. In other words, the virtual assistant may push action recommendations to the user rather than waiting to receive a query or some other prompt from the user. To this end, the virtual assistant and the AI action recommendation system 600 may also be persistent, and may accordingly behave as described above.

As depicted in FIG. 11A, for example, the virtual assistant may be aware of the user's current location and, based at least in part on that knowledge, may proactively recommend at 1100 that the user engage in an "Eco-Friendly Dog Park Workout." The recommended action may be indicated to a user in a manner that will cause the user to notice the recommended action, such as by any technique by which a user can be made aware of an arrived text message, email, phone call, or other type of notification on the smartphone 1000. Selecting the action recommendation appearing on the smartphone display 1005 of FIG. 11A can present a subsequent screen, as illustrated in FIG. 11B. On this subsequent screen, the virtual assistant may provide the user with additional information about the recommended action. For example, the virtual assistant can explain to the user that the recommended action was selected based at least in part on the user's presence at the dog park and advancement of the user's high-level goal of fitness, and because the action comports with the user's desire to expend minimal resources in pursuit of this high-level goal. The virtual assistant may further explain that the combination of the natural setting of the dog park, the ability of the user to listen to music while working out at the dog park, and the minimal resources required relative to the workout, is predicted to provide the user with a pleasant and sustainable experience.

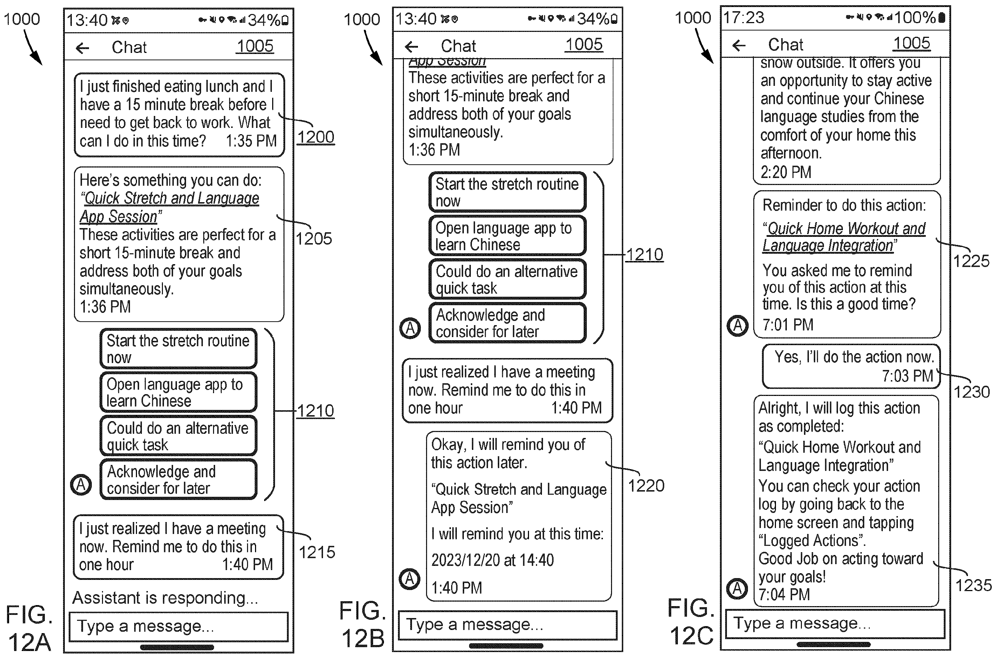

As with the example of FIGS. 10A-10F, the user may also be presented with one or more quick actions 1105, which may function the same as or similar to and may serve the same or similar purposes described with respect to the quick actions 1010 of FIG. 10B. Other additional screens and other additional information, such as but not limited to the additional screens and information shown in FIGS. 10D-10F may also be presented by the virtual assistant in this example. FIGS. 12A-12C present a real-world example of presenting contextualized action recommendations to a user via a virtual assistant that is similar to the example illustrated by FIGS. 10A-10F, but presents additional functionality. The example illustrated by FIGS. 12A-12C may again be implemented using the AI action recommendation system 600 of FIG. 6 with a user system implemented as the smartphone 1000 of FIGS 10A-10F. Therefore, the smartphone 1000 may have any of the functionality previously described herein. While the example of FIGS. 12A-12C represents a user-virtual assistant conversation that is initiated by the user, it should be understood that a first step in the conversation may instead be a proactive action recommendation by the virtual assistant, as is described relative to the example of FIGS. 11A-11B.

The example scenario presented in FIGS. 12A-12C involves a user engaging with a virtual assistant of the AI action recommendation system 600 to request a recommendation of an activity to perform. In this example, the AI action recommendation system 600 is again familiar with the user (e.g., the user is registered with the system) and is aware of one or more high-level goals of the user, such as through any of the mechanisms described above. The virtual assistant again employs a chat interface for communicating with the user.

As indicated in FIG. 12A, the user initially inputs to the virtual assistant, the natural language query 1200 "What can I do in this time?" after briefly explaining that the user is at work and desires to perform the action within the time constraint of a 15 minute break. The query may again be a textual input through a keyboard of the smartphone 1000 or an utterance of the user that is input via a microphone of the smartphone 1000. The virtual assistant, by utilizing the one or more LLMs 636 associated with the AI action recommendation system 600, provides a natural language response 1205 to the user query by recommending that the user complete a "Quick Stretch and Language App Session." This action recommendation by the virtual assistant is made in consideration of a number of factors. For example, the action recommendation is based in part on an awareness by the AI action recommendation system 600 that being more physically fit, more flexible, or something similar thereto, is a high-level goal of the user. The action recommendation is also based in part on the AI action recommendation system 600 being aware that learning another language is a high-level goal of the user. Thus, in this example, the virtual assistant is making an action recommendation based on advancing more than one high-level goal of the user. It can be additionally understood from the dialogue of the response 1205 provided by the virtual assistant that the virtual assistant made the action recommendation in the context of the user currently being at work and having only 15 minutes to perform the recommended action. As described relative to the example of FIGS. 10A-10F, the virtual assistant may consider other context when making such an action recommendation, such as for example, the tools available to the user to complete the recommended action, the space available to the user to complete the recommended action, the user's action type preference, user physical limitations or restrictions, user language preferences, etc.

The user may again be presented with one or more quick actions 1210. The quick actions 1210 may function the same as or similar to and may serve a purpose that is the same or similar to, the functions and purposes described above with respect to the quick actions 1010 of FIG. 10B.

In this example, the user realizes, after receiving the action recommendation from the virtual assistant, that the user has a meeting and, therefore, does not currently have time to perform the recommended action. However, because the user wishes to perform the recommended action, the user requests at 1215 that the virtual assistant remind the user to perform the recommended action in one hour, and in FIG. 12B, it may be observed that the virtual assistant responds 1220 that it will remind the user to perform the recommended action in one hour. As shown, the virtual assistant may also provide other useful information with the response, such as a brief description or a name of the recommended action the virtual assistant will be reminding the user to perform and what date and/or time it will be when the reminder is issued by the virtual assistant.

FIG. 12C illustrates another screen that may be presented by the virtual assistant on the smartphone display 1005 in association with reminding the user to perform the previously recommended action of performing a quick stretch and language app session. For example, the virtual assistant can send the user a reminder notification 1225 as indicated. The user can be made aware of the reminder notification in any manner, such as by any technique by which a user is made aware of an alarm, timer, or an arrived text message, email, phone call, or other type of notification on the smartphone 1000. The content of the reminder notification may vary. In this example, the reminder notification includes a description/name of the recommended action the user is being reminded to perform, and also a reminder that the user asked the virtual assistant to issue the reminder at the designated time. In this example, the virtual assistant also asks the user whether the present time is good time to perform the recommended action, which can afford the user an opportunity to request another reminder, cancel the recommendation if the user still has a conflict or no loner wishes to perform the recommended action, or to inform the virtual assistant that the user will perform the recommended action at the present time, as represented at 1230.

As is further depicted in FIG. 12C, the virtual assistant may, in response to receiving the user response 1235 indicating that the user is about to perform the recommended action, inform the user that the recommended action will be logged as complete and may correspondingly cause the AI action recommendation system 600 to log the recommended action as such. The virtual assistant may also take the opportunity to instruct or remind the user that logged actions can be accessed and reviewed by the user, in this case, by returning to the "Home" page/screen and tapping on a "Logged Action" radio button. The virtual assistant may further communicate with the user, such as for example, by offering praise or motivation to the user relative to performing the action.

It should be realized that in the examples presented by FIGS. 10A-10F, 11A-11B, and 12A-12C, the appearance of the display 1005, the response of the virtual assistant to the query of the user, the use of a chat interface, the selection and presentation of the quick actions, and the selection of and presentation of the additional information, is merely illustrative of one implementation of the AI action recommendation system and virtual assistant. The nature of the virtual assistant communications, the appearance of the display 1005, and the types and content of any other information presented on the display 1005 may be different in other examples.

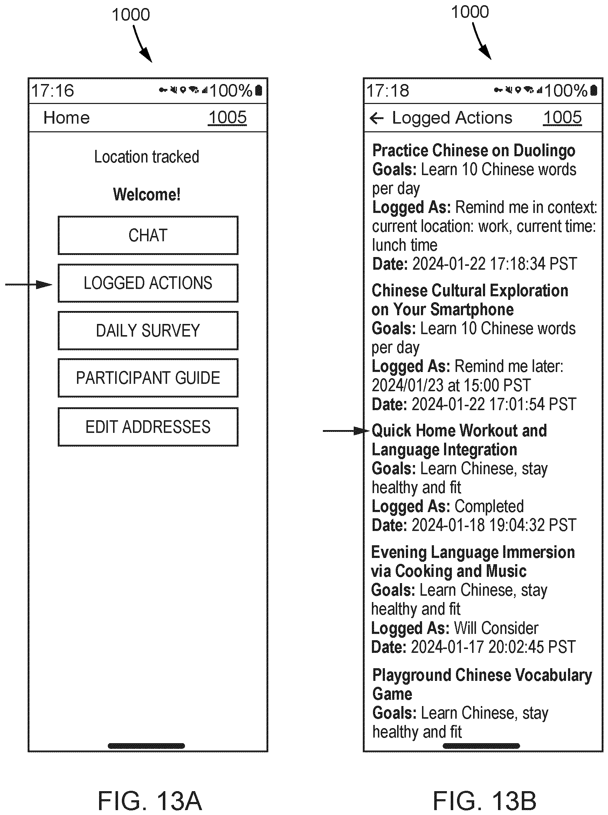

FIG. 13A represents one example of the "Home" screen referred to by the virtual assistant in the virtual assistant response 1235 of FIG. 12C. As shown, this example of the Home screen includes the identified "Logged Actions" radio button that acts as a portal to a "Logged Actions" screen. One example of such a Logged Actions screen is depicted in FIG. 13B and includes a listing of recommended actions that were previously performed by the user and were correspondingly logged to a logged actions repository. The logged actions listings may present associated information that indicates, for example, a high-level goal(s) associated with the each performed action, and a date and time of completion. The logged actions listings may, in some examples, also include action recommendations that were presented to the user but temporarily rejected or scheduled for re-presentation at a later time, and were nonetheless logged by the virtual assistant either proactively or at the request of the user. The manner in which action recommendations and performed recommended actions are logged or not logged by the AI action recommendation system 600 may be determined by preset rules, by user preferences, or by a combination thereof. In some examples, the user can expand the content of the logged actions listings to see additional details about the performed action. In some examples, the user can open the logged action recommendations, such as for example, to receive instructions or otherwise for use in performing the recommended action again.

As is further illustrated in FIG. 13A, the Home screen may include radio buttons or other selectable elements in addition to the Logged Actions radio button. Each of these additional radio buttons may also act as a portal to other screens and functionality of the AI action recommendation system 600. In this example, the Home screen also includes a "Chat" radio button which, for example, may be used to initiate a conversation with the virtual assistant. The Home screen is also shown to include a "Daily Survey" radio button, a "Participant Guide" radio button that may serve as a portal to information on how to use the AI action recommendation system 600, and an "Edit Addresses" radio button that may serve as a portal to a location of the AI action recommendation system 600 where a user can edit contact information or other personal information. The radio buttons of FIG. 13A are merely illustrative, however, and the presence, number, and nature of the radio buttons presented may vary with other examples of the AI action recommendation system 600.

### Additional Considerations

Specific details are given in the above description to provide a thorough understanding of the embodiments. However, it is understood that the embodiments can be practiced without these specific details. For example, circuits can be shown in block diagrams in order not to obscure the embodiments in unnecessary detail. In other instances, well-known circuits, processes, algorithms, structures, and techniques can be shown without unnecessary detail in order to avoid obscuring the embodiments.

Implementation of the techniques, blocks, steps and means described above can be done in various ways. For example, these techniques, blocks, steps and means can be implemented in hardware, software, or a combination thereof. For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described above, and/or a combination thereof.

Also, it is noted that the embodiments can be described as a process which is depicted as a flowchart, a flow diagram, a data flow diagram, a structure diagram, or a block diagram. Although a flowchart can describe the operations as a sequential process, many of the operations can be performed in parallel or concurrently. In addition, the order of the operations can be rearranged. A process is terminated when its operations are completed, but could have additional steps not included in the figure. A process can correspond to a method, a function, a procedure, a subroutine, a subprogram, etc. When a process corresponds to a function, its termination corresponds to a return of the function to the calling function or the main function.

Furthermore, embodiments can be implemented by hardware, software, scripting languages, firmware, middleware, microcode, hardware description languages, and/or any combination thereof. When implemented in software, firmware, middleware, scripting language, and/or microcode, the program code or code segments to perform the necessary tasks can be stored in a machine readable medium such as a storage medium. A code segment or machine-executable instruction can represent a procedure, a function, a subprogram, a program, a routine, a subroutine, a module, a software package, a script, a class, or any combination of instructions, data structures, and/or program statements. A code segment can be coupled to another code segment or a hardware circuit by passing and/or receiving information, data, arguments, parameters, and/or memory contents. Information, arguments, parameters, data, etc. can be passed, forwarded, or transmitted via any suitable means including memory sharing, message passing, ticket passing, network transmission, etc.

For a firmware and/or software implementation, the methodologies can be implemented with modules (e.g., procedures, functions, and so on) that perform the functions described herein. Any machine-readable medium tangibly embodying instructions can be used in implementing the methodologies described herein. For example, software codes can be stored in a memory. Memory can be implemented within the processor or external to the processor. As used herein the term "memory" refers to any type of long term, short term, volatile, nonvolatile, or other storage medium and is not to be limited to any particular type of memory or number of memories, or type of media upon which memory is stored.

Moreover, as disclosed herein, the term "storage medium", "storage" or "memory" can represent one or more memories for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to portable or fixed storage devices, optical storage devices, wireless channels, and/or various other storage mediums capable of storing that contain or carry instruction(s) and/or data.

While the principles of the disclosure have been described above in connection with specific apparatuses and methods, it is to be clearly understood that this description is made only by way of example and not as limitation on the scope of the disclosure.

## Claims

1. A contextualized action recommendation virtual assistant comprising:
a user system comprising a display to display content to a user, one or more sensors to capture input data, and a virtual assistant application;
an AI action recommendation system that is associated with a large language model and includes a virtual assistant engine that is cooperative with the virtual assistant application of the user system to implement the virtual assistant;
one or more processors; and
one or more memories accessible to the one or more processors, the one or more memories storing a plurality of instructions executable by the one or more processors, the plurality of instructions comprising instructions that, when executed by the one or more processors, cause the one or more processors to perform processing comprising:
collecting input data comprising personal information data of the user that includes at least one high-level goal of the user, and user context data from the one or more sensors of the user system;
generating, using the input data, a prompt for the large language model;
inputting the prompt to the large language model;
generating, by the large language model, a contextualized action recommendation for the user based on the prompt, wherein the contextualized action recommendation is predicted to help the user achieve the at least one high-level goal; and
presenting the contextualized action recommendation to the user via a virtual assistant user interface on the display of the user system.

2. The contextualized action recommendation virtual assistant of claim 1, wherein the user system comprises a portable electronic device selected from the group consisting of a desktop computer, a notebook or laptop computer, a netbook, a tablet computer, an e-book reader, a global positioning system (GPS) device, a personal digital assistant, a smartphone, a wearable extended reality device, and combinations thereof.

3. The contextualized action recommendation virtual assistant of claim 1 or claim 2, wherein the one or more sensors of the user system include one or more of a motion sensor, an image capturing device, an input and/or output audio transducer, a GPS transceiver, and a user system orientation sensor.

4. The contextualized action recommendation virtual assistant of any preceding claim, wherein the AI action recommendation system includes a recommendation engine comprising:
a context detector component configured to determine a current user context from the user context data collected from the one or more sensors of the user system, and wherein the current user context includes one or more of a location of the user, places of interest near the location of the user, a time of day, a day of week, weather conditions, movement of the user, and tools available to the user to complete the action of the action recommendation;
a goal parser component configured to receive the personal information data of the user and to divide the at least one high-level goal of the user into a plurality of sub-goals; and
the large language model, wherein the large language model is configured to receive, relative to generating the contextualized action recommendation, the user context from the context detector component and the plurality of sub-goals from the goal parser component.

5. The contextualized action recommendation virtual assistant of any preceding claim, wherein the contextualized action recommendation is a natural language contextualized action recommendation.

6. The contextualized action recommendation virtual assistant of any preceding claim, further comprising a remote system communicatively coupled to the AI action recommendation system, the remote system storing a user profile that includes the personal information data of the user.

7. The contextualized action recommendation virtual assistant of any preceding claim, wherein the virtual assistant user interface is a chat interface.

8. A computer implemented method comprising:
implementing a virtual assistant through a user system comprising a display that displays content to a user, one or more sensors that capture input data, and a virtual assistant application, in combination with an AI action recommendation system that is associated with a large language model and includes a virtual assistant engine that cooperates with the virtual assistant application of the user system to implement the virtual assistant;
collecting input data comprising personal information data of the user that includes at least one high-level goal of the user, and user context data from the one or more sensors of the user system;
generating, using the input data, a prompt for the large language model;
inputting the prompt to the large language model;
generating, by the large language model, a contextualized action recommendation for the user based on the prompt, wherein the contextualized action recommendation is predicted to help the user achieve the at least one high-level goal; and
presenting the contextualized action recommendation to the user via a virtual assistant user interface on the display of the user system.

9. The computer implemented method of claim 8, wherein the user system comprises a portable electronic device selected from the group consisting of a desktop computer, a notebook or laptop computer, a netbook, a tablet computer, an e-book reader, a global positioning system (GPS) device, a personal digital assistant, a smartphone, a wearable extended reality device, and combinations thereof.

10. The computer implemented method of claim 8 or claim 9, wherein the contextualized action recommendation is presented to the user as a natural language contextualized action recommendation.

11. The computer implemented method of any of claims 8 to 10, wherein the personal information data of the user is retrieved from a user profile associated with the user, and optionally wherein the user profile is selected from the group consisting of a network accessible social media user profile, a user profile stored in a datastore communicatively coupled to the AI action recommendation system, and a user profile stored on the user system.

12. The computer implemented method of any of claims 8 to 11, further comprising privacy rules that determine an extent of the personal information data of the user that is shareable with the AI action recommendation system.

13. The computer implemented method of any of claims 8 to 12, wherein the virtual assistant is persistent, such that at least some of the user context data is collected at times when the user is not actively engaged with the virtual assistant.

14. The computer implemented method of any of claims 8 to 13, wherein the virtual assistant user interface is a chat interface.

15. A non-transitory computer-readable memory storing computer-readable instructions that, when executed by one or more processors, cause the one or more processors to perform the method of any of claims 8 to 14.
